# EUROPÄISCHE PATENTSCHRIFT

(11) **EP 3 968 822 B1**
(45) Veröffentlichungstag und Bekanntmachung des Hinweises auf die Patenterteilung: **25.06.2025**
(21) Anmeldenummer: 20726397.1
(22) Anmeldetag: 14.05.2020
(51) Int. Cl.: A47C 1/12

(54) **EVENTMOBILIAR**
EVENT FURNITURE
MOBILIER POUR ÉVÉNEMENTS

(30) Priorität: 16.05.2019 DE 102019113011
(43) Veröffentlichungstag der Anmeldung: 23.03.2022
(73) Patentinhaber: Mack Rides IP GmbH & Co. KG, 79183 Waldkirch (DE)
(72) Erfinder: GÜNTER, Burger, 79183 Waldkirch (DE)
(74) Vertreter: Westphal, Mussgnug & Partner Patentanwälte mbB
(86) Internationale Anmeldenummer: PCT/EP2020/063554
(87) Internationale Veröffentlichungsnummer: WO 2020/229637

(56) Entgegenhaltungen:
- CN-A- 106 625 695
- US-A1- 2011 309 659
- US-A1- 2016 213 148
- US-B2- 7 901 004

## Beschreibung

Die Erfindung betrifft ein Eventmobiliar mit den Merkmalen des Oberbegriffs des Patentanspruchs 1.

Heutzutage wird die Teilnahme an Veranstaltungen des gesellschaftlichen Lebens mit immer größeren Erwartungen und einem Streben nach Erlebnissen, die über die eigentliche Veranstaltung hinaus gehen verknüpft. Beispielsweise wird ein Restaurantbesuch in immer weiter zunehmendem Umfang nicht mehr allein als Aktivität zum Zwecke der Nahrungsaufnahme und gegebenenfalls noch zum Zwecke eines gesellschaftlichen Beisammenseins gesehen, sondern soll gleichzeitig ein kurzweiliges Erlebnis darstellen. Dementsprechend gibt es immer mehr Angebote im Bereich der Erlebnisgastronomie, die ein solches Erlebnis mit dem Essen koppeln. Im einfachsten Fall kann dies im Rahmen eines Themenrestaurants erfolgen, bei dem Einrichtung, Speisekarte, aber auch das Outfit der Bedienungen an ein bestimmtes Thema angepasst sind.

Darüber hinaus haben sich inzwischen sehr beliebte Formate wie Krimidinner, Witzigmanns Palazzo oder Schuhbecks Teatro entwickelt, bei denen die Mahlzeit von einem Theaterstück oder einer Show-Veranstaltung umrahmt oder in sie eingebettet wird.

Ein anderer populärer Ansatz besteht darin, dass Teile des üblichen Ablaufs in einem Restaurant in unüblicher, außergewöhnlicher Weise durchgeführt werden. Ein Schritt in diese Richtung ist das Show-Cooking, bei dem die Zubereitung der Speisen direkt vor den Augen der Gäste erfolgt. Bekannt ist auch, dass das Bedienpersonal Einlagen präsentiert. Eine weitere zu dieser Kategorie zählende Variante sind die bekannten Rollercoaster-Restaurants, die auch in der EP 1 833 331 B1 oder der DE 10 2015 011 538 beschrieben sind. In diesen Restaurants wird der traditionelle Servierprozess dadurch ersetzt, dass die bestellten Speisen und Getränke unter den Blicken der Gäste über ein achterbahnartiges Schienensystem den Tischen zugeführt werden, wobei die Beladung dieses Schienensystems teilweise für die Gäste sichtbar durch Roboter oder Roboterarme erfolgt.

Den bisherigen Konzepten ist allerdings gemein, dass der Gast während des Events im Wesentlichen statisch in einem Raum angeordnet ist und sich allenfalls in einigen Ausnahmefällen, z.B. wenn der Raum auf einem Ausflugsschiff angeordnet ist oder im Fall eines Speisewagens in einem Zug, der Raum selbst bewegt. Es besteht daher Bedarf nach Eventmobiliar, das bei einem Event, beispielsweise einem Restaurant-, Cafe- oder Barbesuch, aber unter Umständen auch einem Meeting oder einer kulturellen Veranstaltung eine neue Erlebnisdimension erschließt.

Weiteren Stand der Technik bilden die US 7 901 004 B2 und die US 2011 309 659 A1.

Der vorliegenden Erfindung liegt daher die Aufgabe zugrunde, ein derartiges Eventmobiliar bereitzustellen. Diese Aufgabe wird gelöst von einem Eventmobiliar mit den Merkmalen des Patentanspruchs 1. Vorteilhafte Weiterbildungen der Erfindung sind Gegenstand der abhängigen Patentansprüche.

Wie in allgemein üblich weist das erfindungsgemäße Eventmobiliar als Eventmobiliarbestandteile mindestens einen Tisch und mindestens einen Stuhl aufweist.

Erfindungswesentlich ist, dass der mindestens eine Tisch, ein Tischteil des mindestens einen Tisches, der mindestens eine Stuhl und/oder eine Kombination der genannten Eventmobiliarbestandteile Mittel zur Durchführung einer individuellen, maschinell gesteuerten Bewegung aufweisen.

Unter einer maschinell gesteuerten Bewegung wird dabei eine angetriebene Bewegungen verstanden, die zumindest nicht unmittelbar von einem Benutzer des Eventmobiliarbestandteils gesteuert werden, selbst wenn sie von ihm gegebenenfalls beeinflusst werden können, z.B. durch eine Notbremsung oder Angabe eines gewünschten Zielortes, der dann auf eine Weise angefahren wird, die nicht der unmittelbaren Kontrolle des Nutzers unterliegt. Beispielsweise kann eine maschinell gesteuerte Bewegung mit Technologien, die bei fahrerlosen Transportsystemen zum Einsatz kommen, realisiert werden.

Anzumerken ist dabei insbesondere, dass die Anwesenheit von Mitteln zur Durchführung einer individuellen, maschinell gesteuerten Bewegung nicht ausschließt, dass zusätzlich Mittel zur Durchführung einer vom Gast selbst gesteuerten Bewegung vorliegen, wobei auch Teile dieser Mittel zu beiden Zwecken Verwendung finden können. In der Tat ist insbesondere gemäß einer bevorzugten Weiterbildung der Erfindung vorgesehen, dass das Eventmobiliar zusätzlich auch Bedienelemente zur Beeinflussung der Bewegung durch den Gast, beispielsweise Pedale, Antriebswippen, Handhebel, die wie senkrechte Ruder wirken oder dergleichen aufweist.

"Individuell" ist eine maschinell gesteuerte Bewegung dabei im Sinne dieser Offenbarung dann, wenn eine maschinell gesteuerte Bewegung unterschiedlicher Eventmobiliarbestandteile zu demselben Zeitpunkt unterschiedlich ausfallen kann. Umgekehrt gesagt sind also maschinell gesteuerte Bewegungen, bei denen sich die Relativposition der Eventmobiliarbestandteile zueinander nicht ändern, keine individuellen maschinell gesteuerten Bewegungen.

Auch wenn spezielle Konfigurationen von Mitteln zur Durchführung einer individuellen, maschinell gesteuerten Bewegung weiter unten noch detaillierter vorgestellt werden sei an dieser Stelle bereits darauf hingewiesen, dass solche Mittel im Sinne dieser Offenbarung bereits dann vorhanden sind, wenn ein Zusammenwirken mit anderen, außerhalb des entsprechenden Eventmobilarteils notwendig ist, um eine Bewegung auszuführen.

Beispielsweise kann es ausreichen, wenn lediglich ein Kopplulungselement zur Ankopplung an einen außerhalb des Eventmobiliarbestandteils vorgesehenen Antrieb vorgesehen ist, etwa eine magnetische Kopplung an ein Magnettransportsystem oder eine mechanische Kopplung an eine Förderkette; der Antrieb muss also nicht zwingend vollständig in das Eventmobiliarteil integriert sein, damit dieses Mittel zur Durchführung einer individuellen, maschinell gesteuerten Bewegung aufweist.

Ebenso kann eine Kopplung an eine extern vorgesehene Steuerung ausreichen, beispielsweise drahtlos an einen in das Eventmobiliarteil integrierten Antrieb übermittelte Steuersignale, so dass auch eine lokale Steuerung zwar möglich und für eine Reihe von Anwendungen sinnvoll, aber nicht notwendig ist, das Merkmal, dass Mittel zur Durchführung einer individuellen, maschinell gesteuerten Bewegung vorhanden sind, erfüllt ist.

Das erfindungsgemäße Eventmobiliar erlaubt durch diese Merkmale, dass sich für den Gast, der dieses Eventmobiliarbestandteil nutzt, in überraschender und nicht vorhersagbarer Weise die Umgebung verändert. Beispielsweise können bei geeigneter Konfiguration der Eventmobiliarbestandteile unterschiedliche Teile der Mahlzeit in unterschiedlichen Bereichen des Restaurants eingenommen werden, der Serviervorgang kann umgekehrt werden, indem der Gast in die Küche gefahren wird und dort sein Essen entgegennimmt, oder die Sitzordnung am Tisch kann variiert werden.

Es können auf diese Weise bei geeigneter Ausstattung des Restaurants auch Geschichten oder Reisen auf eine bislang unerreichte Art während des Essens in Szene gesetzt werden. Gleichzeitig lässt sich bei geeigneter Umsetzung dadurch aber auch eine Durchmischung von Gästen während einer Feier ebenso realisieren wie z.B. eine Single-Börse.

In einer vorteilhaften Weiterbildung der Erfindung ist vorgesehen, dass das Eventmobiliar einen aus mehreren Tischteilen zusammengesetzten oder zusammensetzbaren Tisch und diesem Tisch zugeordnete Stühle aufweist, wobei dieses Eventmobiliarbestandteil vorzugsweise jeweils an allen seinen Komponenten oder an zusammengefassten Gruppen von Komponenten, die ein Eventmobiliarbestandteil bilden, Mittel zur Durchführung einer individuellen, maschinell gesteuerten Bewegung aufweisen. Dadurch wird es möglich, die Tischgröße, aber auch die Tischnachbarn während des Restaurantbesuchs zu variieren. Es kann also beispielsweise eine große gemeinsame Tafel plötzlich zerfallen und sich zu einer Mehrzahl kleinerer Tische rekonfigurieren.

Eines der Standardprobleme von Anlässen, bei denen viele Leute um eine gemeinsame Tafel herum ein mehrgängiges Essen genie-ßen, kann damit aufgelöst werden, denn während man dann bislang den ganzen Abend mit denselben mehr oder weniger interessanten Mitmenschen Smalltalk machen musste, kann nun eine Durchmischung durch automatisch eingeleitete Platzwechsel erfolgen.

Allerdings ist insbesondere in der Praxis eines Restaurantbesuchs in der Regel erwünscht, dass eine eindeutige Zuordnung der Speisen und Getränke zu einem Kunden oder Gast erhalten bleibt. Bevorzugt ist daher, dass einige Tischteile oder alle Tischteile mit jeweils mindestens einem der dem Tisch zugeordneten Stühle so verbunden sind, dass das Tischteil und der damit verbundene Stuhl eine Einheit bilden, die gemeinsam im Raum bewegt werden kann und dann die Einheit als ein Eventmobiliarbestandteil verstanden werden kann. Diese Einheiten bzw. Eventmobilarbestandteile weisen dementsprechend die Mittel zur Durchführung einer maschinell gesteuerten Bewegung auf. Dies bringt dann mit sich, dass die Tischteile und die damit verbundenen Stühle zu mehreren Tischen oder zu einem anders zusammengesetzten Tisch rekonfigurierbar sind.

Insbesondere kann dies durch Anordnung mehrerer Komponenten auf einer gemeinsamen Grundplatte geschehen, die dann die Mittel zur Durchführung der maschinell gesteuerten Bewegung aufweist.

Um auch bei der Verwendung derartiger Eventmobiliarbestandteile sicherzustellen, dass die Anordnung des Stuhls relativ zum Tischteil noch variabel ist, was einerseits für den Sitzkomfort, andererseits für das Platz nehmen und schließlich in Fällen, in denen die Mahlzeit durch eine Animation begleitet wird auch zum Sicherstellen einer optimalen Perspektive auf das Gesehen wünschenswert ist, ist es bevorzugt, dass bei mindestens einem Eventmobiliarbestandteil ein Stuhl relativ zum Tischteil beweglich angeordnet ist, beispielsweise dadurch, dass Stuhl und Tischteil auf einer gemeinsamen Grundplatte mit einer Führung oder Lagerung angeordnet ist, in der der Stuhl bewegt, insbesondere verschoben, gedreht und/oder in der Höhe verstellt werden kann. Insbesondere kann hier eine Einstellmöglichkeit bereitgestellt werden, die es dem Nutzer des Eventmobiliars selbst erlaubt, eine für ihn ergonomisch angenehme Position einzustellen.

Besonders bevorzugt kann es dabei sein, wenn die Bewegung des Stuhls relativ zum Tischteil alternativ oder zusätzlich bei mindestens einem Eventmobiliarbestandteil eine angetriebene Komponente enthält und dass Antriebsmittel für diese Bewegung an dem Eventmobiliarbestandteil angeordnet sind. Einerseits kann so eine komfortablere, z.B. elektrische angetriebene Verstellung ermöglicht werden. Andererseits kann dann, wenn diese Antriebsmittel als maschinelle Antriebsmittel, die von einer Steuerung kontrolliert werden, ausgeführt werden, erneut eine Beeinflussung der Situation vorgenommen werden, indem z.B. der Stuhl des fraglichen Gastes in eine bestimmte Richtung gedreht wird, in der in der die Mahlzeit umrahmenden Animation gerade etwas passiert, dass er angehoben wird, oder auch eine Vibration angeregt wird, was dann auch benutzt werden kann, um Geschehnisse der begleitenden Animation oder Erlebnisgeschichte zu untermalen. Beispielsweise können so die Erschütterungen eines Erdbebens, eines einstürzenden Hauses oder eines heranstampfenden Riesendinosauriers noch realistischer dargestellt werden.

Wenn mindestens ein Stuhl und/oder mindestens ein Tisch eines Eventmobiliarbestandteils an dem Eventmobiliarbestandteil über eine Schnellkupplung mit dem Eventmobiliarbestandteil verbunden ist, können diese Eventmobiliarbestandteile schnell durch andere, gleich- oder andersartige Eventmobiliarbestandteile ersetzt werden. Dies kann zum Beispiel dazu beitragen, eine schnelle Anpassung des animierten Restaurants bei einem Wechsel des Themas des Restaurants -beispielsweise von einer Weltraumreise zu einem Wildwest-Abenteuer- oder eine Anpassung an Veranstaltungen unterschiedliche Altersgruppen, beispielsweise eine nachmittägliche Geburtstagsfeier für Kinder, auf die abends dann eine Single-Börse folgt, möglich zu machen.

Ein weiteres ungewöhnliches Erlebnis kann erzeugt werden, wenn zwei oder mehrere Tischteile vorhanden sind, die in mindestens einer Konfiguration des Eventmobiliars teilweise miteinander überlappend positionierbar sind. Dies erlaubt es beispielsweise, einen Tisch mit daran sitzenden Gästen zunächst quasi unmerklich auseinander gleiten zu lassen, wodurch in der Tischmitte Raum für andere Effekte, die sich von oben oder unten im Mittelbereich ergeben, entsteht, welche dann überraschend zum Einsatz gebracht werden können.

Als vorteilhafte Weiterentwicklung der Erfindung hat es sich herausgestellt, dass an mindestens einem Tisch und/oder an mindestens einem Stuhl mindestens ein Sensor angeordnet ist, der zur Detektion der Anwesenheit, der aktuellen Position und/oder einer Bewegung eines Gastes oder zur Detektion der Anwesenheit, der aktuellen Position und/oder einer Bewegung eines anderen Eventmobiliarbestandteils ausgelegt und eingerichtet ist. Diese Sensorik kann insbesondere aus Sicherheitserwägungen vorteilhaft sein. Beispielsweise kann so erkannt werden, wenn ein Gast des animierten Restaurants seinen Platz verlässt und eine Bewegung des entsprechenden Eventmobiliarbestandteils adäquat angepasst, z.B. sanft gestoppt werden.

Ebenfalls sehr sinnvoll ist es, mittels Sensoren die Andockvorgänge unterschiedlicher Tischteile aneinander zu überwachen und gegebenenfalls in die maschinelle Bewegung einzugreifen oder spezielle (Show-)Effekte auszulösen. Beispielsweise kann um Eventmobiliarbestandteile ein virtueller Schutzmantel mit verschiedenen Sicherheitszonen gelegt werden, um den Verkehr und Kopplungsvorgänge sicher und effizient zu regeln, wobei dann z.B. Geschwindigkeiten und Antriebskräfte vorsorglich reduziert werden, wenn ein anderes Eventmobiliarbestandteil oder sonstiges Objekt in der Sicherheitszone geortet wird. Es könnte aber z.B. auch als Zusatzeffekt im kritischen und finalen Kopplungsvorgang rot eingefärbter oder rot ausgeleuchteter Nebel austreten und/oder ein Soundeffekt ausgegeben oder ein Bereich bei Berührung in Vibration versetzt werden. Dabei sollten die entsprechenden Zonen frei programmierbar sein.

Für die konkrete Realisierung einer solchen Sensorik gibt es eine Vielzahl von Möglichkeiten. Beispielsweise können Schnittstellenscanner, Drucksensoren, IR-Sensoren oder optische Sensoren eingesetzt werden, um das System zu realisieren.

Vorteilhaft ist ferner, wenn an mindestens einem Tisch und/oder an mindestens einem Stuhl mindestens eine Benutzerschnittstelle, beispielsweise zur Beeinflussung der maschinellen Bewegung durch einen Gast und/oder zur Durchführung von Bestellvorgängen, angeordnet ist. Ebenfalls vorteilhaft ist es, zusätzlich oder alternativ ein Display zur Anzeige von Informationen vorzusehen. Eine solche Benutzerschnittstelle kann dann beispielsweise als ein Touchpanel oder auch als ein spezieller, in das fragliche Eventmobiliarbestandteil integrierter Tablet-PC ausgeführt sein, die in Signalkommunikation mit einer externen Steuerung steht, die die Benutzerwünsche weiterverarbeitet.

Abgesehen von der Möglichkeit, das Speisen- und Getränkeangebot abzugeben und Bestellungen aufzugeben können hier auch Informationen als Entscheidungsgrundlage für den weiteren Verlauf des Restaurantbesuchs vorgestellt werden und Präferenzen des Gastes für den weiteren Verlauf des Restaurantbesuchs abgefragt werden.

Beispielsweise könnten bei einer Einbettung der Mahlzeit in eine animierte Abenteuergeschichte mehrere Möglichkeiten einer Fortsetzung zur Abstimmung gestellt werden, so dass je nach Ausgang der jeweiligen Voten ein mehrmaliger Besuch des Restaurants trotz thematisch gleicher Abenteuergeschichte jeweils unterschiedliche Geschichten erlebt werden. Man könnte aber auch beispielsweise im Rahmen einer Single-Börse Präferenzen für den Teilnehmer, in dessen Nähe man beim nächsten Gang gerne sitzen würde, eingeben, gegebenenfalls unterstützt durch Kurz-Informationen zu dieser Information, die über das Display abrufbar sind. In diesem Szenario könnten dann die Präferenzen aller Gäste von einer zentralen Steuerung evaluiert, darauf basierend eine optimierte Sitzordnung berechnet und die Gäste mit ihren Eventmobiliarbestandteilen dorthin fahren. Ein ähnliches Konzept kann man bei der Ausrichtung von Familienfeiern zur Anwendung bringen um zu gewährleisten, dass jedes Familienmitglied ein möglichst positives Erlebnis hat.

Besonders vorteilhaft ist es, wenn an mindestens einem Tisch und/oder an mindestens einem Stuhl -unabhängig davon, ob der Tisch oder Stuhl ein eigenständiges Eventmobiliarbestandteil bildet oder Teil einer Einheit ist, die das eigenständige Eventmobiliarbestandteil darstellt- mindestens eine Vorrichtung zur sensorischen Stimulation eines Gastes, der an dem Tisch und/oder dem Stuhl sitzt, angeordnet ist. Diese Vorrichtung zur sensorischen Stimulation eines Gastes kann auf unterschiedlichste Weise realisiert werden.

Erstens ist eine visuelle Stimulation möglich, die im einfachsten Fall durch Bereitstellen von Inhalten auf einem Bildschirm erfolgen kann. Eine andere Art der visuellen Stimulation ist die Projektion auf eine Fläche, z.B. eine Tischoberfläche. Mit Mitteln moderner Projektionstechnik kann man auf einer solchen Fläche virtuelle Gegenstände entstehen lassen, die täuschend echt wirken können. Auf diese Weise kann man beispielsweise bei der Einbettung des Restaurantbesuchs in ein Thema "Expedition in Afrika" ein Strom von Riesenameisen scheinbar über den Tisch laufen. Durch derartige Projektion kann beispielsweise auch verschleiert werden, dass ein Objekt tatsächlich vom Tisch verschwunden ist, indem es durch seine Projektion ersetzt wird. Noch andere Arten visueller Effekte lassen sich durch eine Anpassung der Beleuchtung, eine Vernebelung, einen Ausstoß von Konfetti und vergleichbare Maßnahmen erreichen.

Zweitens ist eine akustische Stimulation möglich. Neben der reinen Wiedergabe von Inhalten über einen lokal angeordneten Lautsprecher kann diese auch mit einer deutlich komplexeren Soundanlage erfolgen, welche auf Input von einer übergeordneten Steuerung hin oder auf Input von ausgelesenen Sensoren hin bestimmte Soundeffekte erzeugt. Beispielsweise könnte die Sitzposition des Stuhls, auf dem der Gast sitzt, überwacht werden und bei jeder Bewegung ein Knarren eingespielt oder mit einer Kameraüberwachung ein Trinkvorgang identifiziert werden, der dann mit lauten Trinkgeräuschen begleitet wird.

Eine andere hochinteressante Alternative besteht darin, bei Einbettung in eine Rahmengeschichte lokal unterschiedliche Informationen über den jeweiligen Lautsprecher auszugeben, beispielsweise ein Mithören von Gesprächen, das bei manchen Positionen im Raum möglich ist, bei anderen aber nicht. Auf diese Weise können beispielsweise Krimi-Dinner noch interessanter gestaltet werden und Gäste zum mehrfachen Besuch derselben Veranstaltung animiert werden, um die Geschichte aus einem anderen Blickwinkel nochmal zu erleben.

Drittens ist eine olfaktorische Stimulation möglich, indem gezielt lokal Geruchsstoffe abgegeben werden. Beispielsweise kann ein Geruch nach Feuer das Erlebnis eines Brandes in der Abenteuergeschichte, mit der der Restaurantbesuch animiert ist, wesentlich intensivieren, oder wenn die Geschichte auf See spielt kann man den Salzgeruch des Meeres olfaktorisch nachzustellen versuchen. Falls die Animation auch Personal und/oder Schauspieler involviert, kann auch deren Auftreten olfaktorisch untermalt werden, beispielsweise indem wenn der Piratenkapitän am Tisch vorbeigeht ein intensiver Rumgeruch abgegeben wird.

Viertens kann die Stimulation auch haptisch erfolgen, wofür eine Vielzahl von Realisierungsmöglichkeiten bestehen. Oben angesprochen wurden bereits Vibrationen, mit denen ein Geschehen untermalt werden kann. Aber auch ein Anblasen mit heißer Luft durch ein Gebläse aus Richtung eines in der Animation dargestellten Feuers oder aus dem Maul eines scheinbar vorbeikommenden, beispielsweise projizierten Tieres kann für sehr eindrucksvolle Effekte sorgen. Auch Flüssigkeiten lassen sich hier, beispielsweise durch Sprühvorrichtungen, mit Erfolg zum Einsatz bringen.

In einer bevorzugten Weiterbildung dieser Ausführungsform wird die Vorrichtung zur sensorischen Stimulation mit der maschinell gesteuerten Bewegung synchronisiert betrieben, um ein stimmiges Gesamterlebnis hervorzurufen. Dies ist insbesondere dann möglich, wenn eine lokale Steuerung von Vorrichtungen am Tisch und/oder eine Steuerung zur Bewegung des Tischens (die auch dieselbe lokale Steuerung am Tisch sein kann wie die Steuerung von Vorrichtungen) mit einem übergeordneten Steuerungs- und/oder Navigationssystem interagiert. Eine solche Interaktion wird aber explizit auch außerhalb von Ausführungsbeispielen dieser Weiterbildung oder der weitergebildeten Ausführungsform als eigenständig vorteilhaft angesehen.

Als vorteilhaft hat es sich weiterhin erwiesen, wenn eine externe Steuerung zur Steuerung der individuellen maschinell gesteuerten Bewegung vorhanden ist. Bevorzugt ist dies eine übergeordnete Steuerung, die nicht nur die maschinell gesteuerte Bewegung eines Eventmobiliarbestandteils kontrolliert, indem sie geeignete Steuerbefehle an den Antrieb übermittelt, sondern die externe Steuerung koordiniert und/oder synchronisiert die individuelle maschinell gesteuerter Bewegung mehrerer Eventmobiliarbestandteile, z.B. mehrerer Tische, mehrerer Tischteile des mindestens einen Tisches, und/oder Stühle. Dementsprechend weist sie vorzugsweise auch ein Navigationsmodul auf, das zu jedem Zeitpunkt die Soll- und bevorzugt auch die Ist-Position der Eventmobiliarsbestandteile ermitteln kann oder kommuniziert mit einem solchen Navigationsmodul.

Insbesondere dann, wenn auch eine globale Vorrichtung zur sensorischen Stimulation vorhanden ist, ist es vorteilhaft, wenn diese ebenfalls von der externen Steuerung gesteuert ist.

Aus Sicherheitsgründen und zur Gewährleistung geordneter Betriebsabläufe ist es vorteilhaft, dass Bedienvorrichtungen für Eventmitarbeiter vorhanden sind, die mit der externen Steuerung in Signalkommunikation stehen und den Eingriff in Abläufe der externen Steuerung ermöglichen. Technisch kann dies beispielsweise durch eine drahtlose Verbindung ebenso realisiert werden wie durch eine Verbindung "by wire", also eine drahtgebundene Verbindung. Vorteilhafterweise weisen diese Bedienvorrichtungen Zustimm- und/oder Manipulationstasten auf, mit denen Programmabläufe gestartet, gestoppt, in vordefinierter Weise verändert oder unterbrochen werden können, so dass lediglich ein einziger Tastendruck oder wenige Tastendrücke ausreichen, um auch komplexe Vorgänge zu kontrollieren und/oder zu beeinflussen.

Auf dieses Weise kann ergänzend zu technischen Sicherheitsfunktionen eine visuelle Kontrolle bereitgestellt werden. Erkennt der entsprechende Mitarbeiter beispielsweise, dass ein Gast sich oder andere gefährdet, kann ein sanfter Stopp oder Notstopp auf Tastendruck herbeigeführt werden. Sollte er beispielsweise feststellen, dass bei der oben exemplarisch erwähnten Projektion von Riesenameisen ein Gast wegen einer Ameisenphobie in Panik gerät, kann gezielt an diesem Tisch die entsprechend Projektion deaktiviert werden. Auf diese Weise kann ein reibungsloser und harmonischer Verlauf des Events gewährleistet werden.

Eine andere technische Möglichkeit zur Bereitstellung der vorstehend beschriebenen Funktionalitäten ist eine Sprachsteuerung, mit der -gegebenenfalls durch spezielle Sprachcodes um ein zufälliges Auslösen zu vermeiden- Sicherheitsfunktionen und/oder Showbefehle ausgelöst bzw. aktiviert werden können. Eine solche Sprachsteuerung kann aber auch in interaktiven Formaten genutzt werden, um den Gästen eine Mitwirkung zu ermöglichen.

Eine weitere vorteilhafte Weiterbildung der Erfindung sieht vor, dass das Eventmobiliar ferner mindestens eine Buffetvorrichtung umfasst, welche Mittel zur Durchführung einer individuellen, maschinell gesteuerten Bewegung aufweist die in gleicher Weise wie die bereits besprochenen individuellen, maschinell gesteuerten Bewegungen realisiert werden können.

Unter einer Buffetvorrichtung sind dabei insbesondere Vorrichtungen zu verstehen, auf denen angerichtete Speisen zum Verzehr bereitgestellt werden; es kann sich also beispielsweise auch um ein Sushi-Band handeln. Ein Beispiel für eine Szene der Animation, die auf diese Weise gestaltbar ist, ist die Ersetzung des eigentlichen Serviervorgangs - man sitzt auf das Essen wartend am Tisch, der sich plötzlich teilt, während die entsprechende Buffetvorrichtung aus der Küche fährt und sich in der Tischmitte positioniert, ehe die Tischteile an die Buffetvorrichtung angedockt werden. Eine andere mögliche Variante ist, dass das Essen quasi "flieht", d.h. mit der Buffetvorrichtung wegfährt und erst mit den jeweiligen Stuhl-Tischteil-Einheiten "eingeholt" bzw. gejagt werden muss.

Ein weiteres vorteilhaft einsetzbares Eventmobiliarbestandteil ist ein Wand-, Trenn- oder Sichtschutzelement, welches Mittel zur Durchführung einer individuellen, maschinell gesteuerten Bewegung aufweist, die in gleicher Weise wie die bereits besprochenen individuellen, maschinell gesteuerten Bewegungen realisiert werden können. Auch dieses Eventmobiliarbestandteil kann eine Vielzahl von Funktionen erfüllen. Einerseits kann sie insbesondere in Szenarien mit sich in Einzeltische zerlegender großer Tafel zur Erzeugung von Privatsphäre in konventioneller Weise dienen oder bei einer Single-Börse Verwendung finden, wenn man einen vermeintlichen Traumpartner gefunden hat um sich gewissermaßen vom Markt zu nehmen. Andererseits kann sie als zusätzliche Projektionsfläche oder als im Raum mobile Quelle für sensorische Stimulation dienen. Sie kann aber auch als spannungssteigerndes Element in Form eines Hindernisses eingesetzt werden, das erst in letzter Minute, wenn eine Kollision quasi unausweichlich scheint, doch noch verschwindet.

Erfindungsgemäß ist eine Docking-Station zur Versorgung von anderen Eventmobiliarbestandteilen, welche Mittel zur Durchführung einer individuellen, maschinell gesteuerten Bewegung aufweisen, mit Energie und/oder Betriebsmaterial, beispielsweise Druckluft oder Bestandteilen von Spezialeffekten wie Flüssigkeiten, Konfetti oder ähnlichem umfasst.

Eine vorteilhafte Ausgestaltung der Mittel zur Durchführung Durchführung der individuellen maschinell gesteuerten Bewegung umfasst mindestens ein Luftkissen, was eine besonders reibungsarme Bewegung über den Boden ermöglicht. Vorteilhafterweise hat dabei das Luftkissen ein Dichtungselement mit einem Grundkörper und einer Dichtlippe, die derart beweglich am Grundkörper angeordnet ist, dass sie beim Aktivieren des Luftkissens gegen den Boden gedrückt wird. Alternativ oder zusätzlich kann das Luftkissen einen separat aufblasbaren Stützring mit Gleitbelag und optional einen oder mehrere zusätzlichen Dichtkämme aufweisen.

Alternativ dazu können die Mittel zur Durchführung der maschinell gesteuerten Bewegung aber auch ein Magnetsystem, ein Reibrad vorhanden ist und wenn die Reibräder oder Mecanumräder bei der Steuerung der maschinell gesteuerten Bewegung softwareseitig gekoppelt und beliebig steuerbar sind. Auf diese Weise wird höchste Beweglichkeit und Rangierfähigkeit auf engstem Raum ermöglicht. Um eine Anpassung an unterschiedliche Bodenbeläge zu erleichtern ist dabei vorteilhaft, wenn vorhandene Reibräder oder Mecanumräder höhenverstellbar sind.

Bevorzugt ist ein Antrieb oder eine Energieversorgung oder eine lokale Steuerung oder eine Kombination dieser Baugruppen an mindestens einem Bestandteil des Eventmobiliars mit Mitteln zur Durchführung einer individuellen maschinell gesteuerten Bewegung vorgesehen.

Ein weiterer optionaler, aber vorteilhafter Eventmobiliarbestandteil ist ein Roboterarm oder Roboter, der beispielweise an einem an der Decke des Restaurants befestigten Schienensystem angebracht sein kann. Dieser kann Servierprozesse ausführen, mit den Gästen interagieren oder Bestellungen aufnehmen.

Eine solche Interaktion kann besonders interessant gestaltet werden, wenn der Roboter oder Roboterarm für die Interaktion mit einer Büste ausgestattet ist, auf die Gesichter projiziert werden können. Dies können beispielsweise die Gesichter berühmter Persönlichkeiten sein, aber auch anderes Bildmaterial, z.B. aus Fotos oder Videos, die im Vorfeld von Angehörigen oder Freunden aufgenommen wurden. Vorzugsweise ist auch die Stimme des Roboters oder Roboterarms entsprechend angepasst. Beispielsweise kann in einem solchen Fall der Roboterarm auf den Gast zugefahren kommen, und der Gast wird von einem Gesicht, das wie das seiner Mutter aussieht in deren Stimme gefragt, was er essen will oder wo er sich wieder rumgetrieben hat.

Ein solcher Roboterarm oder Roboter kann alternativ oder zusätzlich auch für die Bewegung der Eventmobiliarbestandteile sorgen, indem er den Antrieb stellt oder die Steuerung des Antriebs übernimmt. Dazu sollte bevorzugt mindestens ein Bestandteil des Eventmobiliars mit Mitteln zur Durchführung einer individuellen maschinell gesteuerten Bewegung eine Schnittstelle zur Wechselwirkung mit einem Roboterarm oder Roboter aufweisen.

Konkret kann dies beispielsweise so aussehen, dass ein Roboterarm in einen geschützten Abschnitt form- und kraftschlüssig eingreift und so entweder den Antrieb für die Bewegung oder diese mit Navigationskräften lenkt. Natürlich kann der Roboter oder Roboterarm auch die Steuerimpulse geben, beispielsweise durch Bedienung eines Joysticks oder berührungslose Signalübertragung, z.B. durch Nahfeldkommunikation. Gerade letzteres kann den Eindruck erwecken, dass die Bewegung wie durch Zauberei erfolgt.

Insbesondere können dadurch Moon-Walk-Szenen realisiert werden, in denen beispielsweise ein von der Decke kommender Roboter den Tisch zieht und man leichte Geschwindigkeitsveränderungen (das Beschleunigen und Bremsen) auch physikalisch wahrnimmt.

Dabei können auch größere Roboter als Eventmobiliarbestandteile Verwendung finden, die dann beispielsweise ein komplettes Buffetmodul, einen Gast oder einen Gast mitsamt dem Eventmobiliarbestandteil, auf dem der Gast angeordnet ist, bewegt werden können.

Sind mehrere Eventmobiliarbestandteile in Form von Robotern vorhanden ist zudem die Möglichkeit gegeben, die Roboter zusammenwirken zu lassen, beispielsweise indem sie eine Kette bilden, entlang der Eventmobiliarbestandteile oder Speisen weitergereicht werden oder in einer Roboter auf Roboter-Konfiguration, in der beispielsweise ein größerer Roboter einen kleineren trägt, der dann serviert oder umgekehrt.

Es ist auch denkbar, dem Gast die Möglichkeit zu eröffnen, über ein Eventmobiliarbestandteil in Form eines solchen Roboters oder einer Drohne mit einem anderen Gast zu interagieren, Beispielsweise bei einem Single-Event einer Herz-Dame eine Rose bringen zu lassen.

Insbesondere um dies zu ermöglichen kann es vorteilhaft sein, wenn an den Eventmobiliarbestandteilen Identifikationsmerkmale, wie z.B. Nummern-Codes angeordnet sind. Durch entsprechende Eingabe an einer am eigenen Eventmobiliarbestandteil angeordneten Eingabeeinheit kann dann eine Art von Kontaktaufnahme herbeigeführt werden, z.B. durch eine Vibration eines Stuhls, begleitet von einer Drehbewegung, Übermittlung einer kurzen Text-Nachricht auf ein Display eines anderen Eventmobiliarbestandteils oder einen Zeiger, der -gegebenenfalls auch von einem weiteren Eventmobiliarbestandteil aus- ausgefahren bzw. bewegt werden kann, um auf den Auslöser aufmerksam zu machen.

Eine weitere vorteilhafte Möglichkeit, um solche Identifikationsmerkmale zu schaffen, die gleichzeitig auch zur Informationsbereitstellung und -übermittlung genutzt werden kann besteht darin, Eventmobiliarbestandteile mit RFID-Modulen zu versehen.

Die Erfindung wird nachfolgend anhand von Figuren, die Ausführungsbeispiele darstellen, näher erläutert. Es zeigt:
- Fig. 1:: einen Plan eines Beispiels für ein Eventsystem, betrachtet von oben,
- Fig. 2:: ein Beispiel für ein im Raum bewegbares Eventmobiliarbestandteil in Form einer Tisch-Stuhl-Kombination,
- Fig. 3:: ein schematisches Beispiel für eine Tischformation, die mit den im Raum bewegbaren Eventmobiliarbestandteilen aus Figur 2 realisierbar ist,
- Fig.4:: ein Beispiel für eine Interaktion mit einem RoboterArm,
- Fig.5a:: einen Querschnitt durch einen der Tische für 4 Personen aus Figur 3 während einer ersten Phase einer möglichen Beschickung mit Speisen,
- Fig.5b:: einen Querschnitt durch einen der Tische für 4 Personen aus Figur 3 während einer zweiten Phase einer möglichen Beschickung mit Speisen,
- Fig.6:: ein schematisches Beispiel für eine erste Tischformation, bei der die im Raum bewegbaren Eventmobiliarbestandteilen aus Figur 2 an ein Buffetmodul angedockt sind,
- Fig.7:: ein schematisches Beispiel für eine zweite Tischformation, bei der die im Raum bewegbaren Eventmobiliarbestandteilen aus Figur 2 an ein Buffetmodul angedockt sind,
- Fig.8:: ein Beispiel für den Einsatz eines Roboterarms bei der Bewegung von im Raum bewegbaren Eventmobiliarbestandteilen bzw. einer daraus zusammengesetzten Tischformation,
- Fig.9:: ein schematisches Beispiel für eine Tischformation, bei der die im Raum bewegbaren Eventmobiliarbestandteilen aus Figur 2 an ein Show-Cooking-Modul angedockt sind,
- Fig.10:: ein Beispiel für den Einsatz eines Roboterarms bei der Versorgung einer Tischformation mit Speisen,
- Fig.11:: ein Aufbauschema für eine Steuerung,
- Fig.12:: ein Ausführungsbeispiel eines Luftkissen-Pad-Dichtelements,
- Fig.13:: eine erste Variante des Eventmobiliarbestandteils aus Figur 2, und
- Fig.14:: eine zweite Variante des Eventmobiliarsystems aus Figur 2.

Gleiche Objekte werden in allen Figuren mit denselben Bezugszeichen versehen, sofern nichts anderes erwähnt ist. Um die Übersichtlichkeit der Figuren zu erhöhen sind aber nicht in jeder Figur immer alle Bezugszeichen eingetragen.

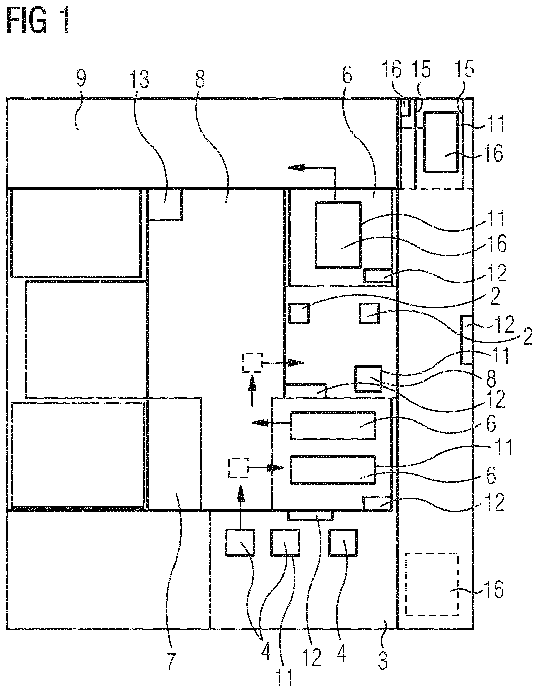

Figur 1 veranschaulicht ein exemplarisches Restaurantsystem als ein Beispiel für ein Eventsystem 10 für ein animiertes Restaurant, das in einem Restaurant mit Barbereich 9, Erlebnisbereich **2,** Vorspeisenbereich 3, zwei Bereichen für Hauptgänge 4,5, einem Dessertbereich 6 sowie Sanitärbereich 7 und Küchenbereich 8 betrieben wird und beispielsweise mit dem Thema "Weltraumreise" betrieben werden kann.

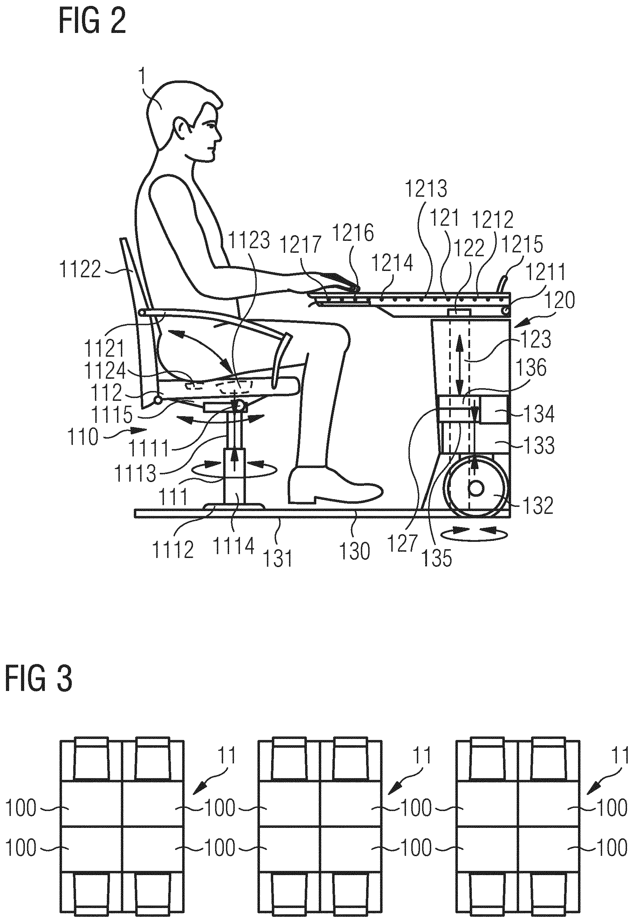

Das Eventsystem 10 hat eine Reihe von Besonderheiten:
Eine erste Besonderheit ist, das insbesondere die Tische 11 mit zugehörigen Stühlen, die in Figur 1 als Rechteck symbolisiert werden und deren aktuelle Platzzahl jeweils in das Rechteck eingetragen sind, durch Gruppen von Eventmobiliarbestandteilen mit Bewegungsmitteln für eine maschinelle Bewegung im Raum gebildet, werden, die exemplarisch jeweils einen Stuhl und einen Tisch aufweisen, der im Bezug auf einen zusammengesetzten Tisch 11, dessen temporärer Bestandteil das Eventmobiliarteil sein kann, ein Tischteil bildet. Ein Ausführungsbeispiel eines solchen Eventmobiliarteils wird nun anhand der Figur 2 näher erläutert:

Figur 2 zeigt ein Beispiel für ein maschinell im Raum bewegbares Eventmobiliarbestandteil 100, das in diesem Fall als ein Stuhl 110, der gemeinsam mit einem Tisch bzw. Tischteil 120 auf einer Bodenplatte 130 angeordnet ist, ausgeführt ist. Dabei ist die Position des Stuhls 110 relativ zum Tisch bzw. Tischteil 120 durch ein Traggestell 111 veränderbar, mit dem eine Sitzfläche 112 mit Armlehnen 1121 und beweglicher Rückenlehne 1122 über eine Schnellkupplung 1111 verbunden ist, so dass die Sitzfläche 112 mit den an ihr angeordneten Anbauteilen einfach und zügig auswechselbar ist, beispielsweise bei einem Wechsel des Themas des Eventsystems oder bei einem Wechsel der Zielgruppe, etwa wenn nachmittags ein Kindergeburtstag stattgefunden hat und abends eine Speed-Dating-Veranstaltung erfolgen soll.

Das Traggestell 111 weist einen Verschiebemechanismus 1112 für die Verschiebung des Stuhls 110 auf den Tisch bzw. Tischteil 120 zu und vom Tisch bzw. Tischteil 120 weg, einen Hubmechanismus 1113 zur Veränderung der Sitzhöhe relativ zur Bodenplatte 130, einen Rotationsmechanismus 1114 zur Drehung um eine Achse senkrecht zur Bodenplatte 130 und einen Kippmechanismus 1115, der bevorzugt eine Kippbewegung entlang einer Kulisse realisiert, um den Drehpunkt an die Lage des durchschnittlichen Körperschwerpunkts zu verlegen, auf. Optional können diese Mechanismen auch angetrieben sein, beispielsweise durch Elektromotoren, und mit einer Steuerung über drahtlose Kommunikationsmittel angesteuert werden.

In der Sitzfläche 112 selbst ist in diesem Ausführungsbeispiel ebenfalls eine Vorrichtung zur sensorischen Simulation 1123 eines Gästen 1 des animierten Restaurants aufgenommen, die hier exemplarisch ein Vibrationselement ist. Diese Vorrichtung zur sensorische Stimulation 1123 wird von einer ersten Steuerung angesteuert, beispielsweise über eine drahtlose Verbindung. Die Ansteuerung ist insbesondere synchronisiert zu einer maschinellen Bewegung des Eventmobiliarbestandteils 100. Dies lässt sich auf vielfältige Weise nutzen - beispielsweise, zur Untermalung der maschinellen Bewegung, etwa um bei einer Fahrbewegung den Eindruck einer holprigen Piste zu vermitteln, aber auch als Signal, dass demnächst eine Bewegung erfolgen wird, auf die der Gast 1 sich vorbereiten sollte.

In der Sitzfläche 112 ist darüber hinaus auch ein Sensor 1124 zur Erkennung der Sitzbelegung integriert, auf dessen Daten die erste Steuerung ebenfalls zurückgreifen kann, beispielsweise im Rahmen einer Sicherheitsüberprüfung, ehe die maschinelle Bewegung eingeleitet wird, oder um an einem leeren Platz Effekte einzusparen. Ein Bedienelement 1125, das auch als Sensor ausgeführt sein kann, und dessen Zustand von der Steuerung ausgelesen wird ist an der Armlehne 1122 angeordnet; mit kann beispielsweise eine Quittierung einer Bewegung bewirkt werden oder signalisiert werden, dass der Gast 1 für eine bevorstehende Bewegung nun bereit ist.

Die Armlehnen 1122 können vorzugsweise auch in der Höhe verfahren und voll abgesenkt werden, was einerseits zur Erfüllung Content-spezifischer Erfordernisse und andererseits zum Hervorrufen von Überraschungseffekten genutzt werden kann. Hierzu kann in der Rückenlehne eine zentrale Führung mit Antrieb integriert sein.

Der Tisch bzw. Tischteil 120 weist eine Tischplatte 121 auf, die über eine Schnellkupplung 122 mit einem bevorzugt höhenverstellbaren Gestell 123 verbunden ist, das auf der Bodenplatte 130 befestigt ist. Die Tischplatte 121 weist in diesem Ausführungsbeispiel eine Vielzahl von Komponenten auf, die aber auch einzeln oder in Gruppen verwendet werden können und voneinander weitestgehend unabhängig sind.

An den Rändern der Tischplatte 121 können beispielsweise Sender und/oder Empfänger 1211 angeordnet sein, die die Bestimmung von Position und Lage des Eventmobiliarbestandteils 100 im Raum ermöglichen und bevorzugt in ein Navigationssystem eingebunden sind, das insbesondere eine Ortung der Positionen sämtlicher Eventmobiliarbestandteile vornimmt.

Sofern ein solches Navigationssystem vorhanden ist, kann diese Ortung auch mit den Signalen von Kontaktschlaufen, die im Boden verlaufen, unterstützt werden.

Die Ränder der Tischplatte 121 können auch Abstandssensoren 1212 aufweisen, mittels denen die Kopplungsvorgänge zwischen unterschiedlichen Eventmobiliarbestandteilen 100 überwacht werden und oder Sensoren 1213 als Sicherheitssensoren aufweisen, zum Beispiel in Form von Drucksensoren oder optischen Sensoren, die sicher verhindern, dass im Rahmen der maschinellen Bewegung ein Körperteil eines Gastes, das sich gerade im Randbereich einer Tischplatte 121 befindet, eingeklemmt werden oder anzeigen, dass der Gast für die nächste Aktion bereit ist oder sicherstellen -soweit dies nicht bereits durch die Sender und/oder Empfänger 1211 im Zusammenwirken mit dem Navigationssystem sichergestellt ist oder zusätzlich zu diesem als redundante Absicherung- dass bei Annäherung an ein anderes Eventmobiliarbestandteil die Geschwindigkeit der Bewegung in adäquater Weise angepasst wird.

Noch weiter können Mittel zur Erzeugung von Spezialeffekten 1214, also weitere Vorrichtungen zur sensorischen Stimulation, mittelbar oder unmittelbar an der Tischplatte 121 angeordnet sein, z.B. LEDs, Düsen zum Freisetzen von Nebel, Feuchtigkeit, Vibrationselemente oder Ähnliches.

Auf der Tischplatte 121 können auch Displays 1215,1216 angeordnet sein, die vorzugsweise mit der Tischplatte 121 verbunden oder in sie integriert sind. Auch diese stellen weitere Vorrichtungen zur sensorischen Stimulation dar; sie können den Gast 1 informieren oder unterhalten. Wenn die Displays 1215, 1216 als Touch-Display ausgestaltet sind, können sie auch als Eingabemittel und Bedienelement für den Gast 1 dienen, es können aber auch separate Bedienelemente 1217, wie hier ein ausziehbar gelagertes Bedienfeld dazu vorhanden sein.

Auf einem solchen Display 1215,1216 am zugewiesenen Platz kann insbesondere das Abrufen personalisierter Inhalte, die der Gast bei der Anmeldung freiwillig offenbart hat, möglich sein. Dies kann ebenfalls synchronisiert erfolgen.

Ferner könnte im Bereich der Displays am oder auf dem Tisch eine Art Jude Box integriert sein, wo gewisse zum Content passende Varianten, z.B. in Form von Film-, Bild-, Ton- oder Lichtinhalten, hinterlegt sind, zwischen denen -ggf. nach Mehrheitsbeschluss aller Gäste- ausgewählt werden kann.

Es können auch spielerische interaktive Möglichkeiten, insbesondere mit Bezug zum jeweiligen Content, angeboten werden, mit denen sich der Gast dann z.B. eine Belohnung verdienen kann. Beispielsweise könnte er die Aufgabe erhalten, bestimmte versteckte Merkmale im Content während des Events zu identifizieren und zu quittieren, dafür auf einem Bonuskonto Punkte gut geschrieben bekommen und für diese dann im weiteren Verlauf des Besuchs Zusatzleistungen erhalten, z.B. einen zusätzlichen Gang oder ein Spezialgetränk.

Um das Gestell 123 herum ist ein Gehäuse 127 angeordnet, das einen geschützten Technikraum für in seinem Inneren aufgenommene, für den Betrieb des Eventmobiliarteils und insbesondere einige der für die maschinelle Bewegung notwendigen Komponenten bildet.

Die Bewegungsmittel für eine maschinelle Bewegung lassen sich folgendermaßen kategorisieren:
Solche Mittel für eine maschinelle Bewegung eines Objekts und insbesondere eines maschinell beweglichen Eventmobiliarbestandteils lassen sich generell folgendermaßen kategorisieren: Erstens gibt es Tragmittel, die das zu bewegende Objekt in eine Position bringen bzw. dort halten, in der es ohne signifikante Reibung bewegt werden kann. Beispiele für solche Tragmittel sind Räder oder (Kugel-)Rollen, Luftkissen, sie können aber auch durch geeignete Magnetsysteme realisiert werden. Offenkundig ist diese Art von Bewegungsmittel für eine maschinelle Bewegung zwingend erforderlich.

Zweitens gibt es Antriebsmittel, die die eigentliche Bewegung des zu bewegenden Objekts erzeugen. Diese können je nach Ausführung auch eine Funktion als Tragmittel erfüllen bzw. mit diesen zusammenfallen, wie es etwa bei angetriebenen Rädern, insbesondere Reib- oder Mecanumrädern, oder Räderachsen der Fall ist. Solche Antriebsmittel müssen aber nicht zwingend vollständig am zu bewegenden Objekt angeordnet sein, wohl aber zumindest eine Teilkomponente, mit der dann ein nicht am zu bewegenden Objekt angeordnetes Teil der Antriebsmittel gekoppelt ist, beispielsweise bei einem Magnetsystem über magnetische Wechselwirkung oder über einen mechanischen Eingriff, z.B. bei einem System mit Förderketten.

Drittes gibt es Steuerungsmittel, die dem Antriebsmittel die auszuführende Bewegung vorgeben. Diese können lokal am zu bewegenden Objekt oder nicht am zu bewegenden Objekt vorhanden sein. Im ersten Fall können sie so ausgeführt sein, dass sie teilautonom agieren, wie z.B. bei Flurtransportsystemen oder bei Konzepten zum autonomen Fahren bei Fahrzeugen. Im zweiten Fall erhalten die Antriebmittel die Steuerbefehle von einer externen Steuerung. Es sind auch Mischfälle möglich, in denen eine untergeordnete Steuerung lokal am zu bewegenden Objekt vorhanden ist, aber auch Steuerbefehle von einer nicht am zu bewegenden Objekt angeordneten übergeordneten Steuerung empfängt und ausführt.

Viertens ist in allen Fällen zur Realisierung der erfindungsgemäßen Synchronisation im Regelfall zumindest ein Kommunikationsmodul am zu bewegenden Objekt vorhanden, mit dem Steuerbefehle und Daten mit einer anderen Steuerung ausgetauscht werden können.

Fünftens können auch Betriebsmittelspeicher und/oder Betriebsmittelerzeuger einen wesentlichen Bestandteil der Mittel zur maschinellen Bewegung bilden, beispielsweise bei einem System mit Luftkissen ein Druckluftreservoir als Betriebsmittelspeicher und ein Kompressor als Betriebsmittelerzeuger, beziehungsweise beispielsweise ein Speicherkondensator (CAP), ein Superkondensator super CAP eine Batterie oder ein Akku als Betriebsmittelspeicher für den Bedarf eines lokalen, elektrisch angetriebenen Antriebsmittels, einer lokalen Steuerung und/oder des Kommunikationsmoduls oder Mittel zur induktiven Stromübertragung als Betriebsmittelerzeugung.

Bei dem in Figur 2 dargestellten Ausführungsbeispiel eines maschinell beweglichen Eventmobiliarbestandteils 100 sind an der Unterseite der Bodenplatte 130 die Tragmittel 131 vorgesehen, die z.B. als Luftkissen-Pads , Magnete, Kugelrollen oder dergleichen ausgeführt sein können.

Als Antriebsmittel ist bei dem in Figur 2 dargestellten Ausführungsbeispiel eines maschinell beweglichen Eventmobiliarteils mindestens ein elektrisch angetriebenes Reibrad 132, vorzugsweise ein Paar von elektrisch angetriebenen Reibrädern 132, um eine bevorzugt vertikal verlaufende Achse drehbar angeordnet, wobei auch diese Drehbewegung angetrieben ist. Vorzugsweise ist diese Drehbarkeit am Quadrantenpunkt des Reibrads 132 realisiert. Unabhängig davon bevorzugt ist es, wenn die Drehung mit einer möglichst hohen Auflösung der Winkelinkremente realisiert wird.

Zusätzlich ist ein angetriebener Höhenverstellmechanismus 133 für das elektrisch angetriebene Reibrad 132 oder das Paar von elektrisch angetriebenen Reibrädern vorhanden, um eine Feinjustage der Lastenverteilung und des Anpressdrucks zu ermöglichen. Es versteht sich von selbst, dass die Bodenplatte 130 eine Öffnung aufweist, durch die hindurch die Reibräder 132 in Kontakt mit dem Boden stehen. Natürlich kann eine solche Anordnung in gleicher Weise mit Mecanum-Rädern realisiert werden.

Die Reibräder 132 inklusive ihres elektrischen Antriebs und des Höhenverstellmechanismus 133 sind gemeinsam mit einem Betriebsmittelspeicher 134, hier konkret einer Batterie für die Stromversorgung der elektrischen Komponenten und im Fall der Verwendung eines Luftkissens oder Luftkissen-Pads einem Druckluftspeicher sowie lokalen Steuerungsmitteln 135 und einem Kommunikationsmodul 136, das bevorzugt drahtlos arbeitet und die Signalkommunikation mit der Steuerung 13 herstellt, im Gehäuse 127 untergebracht.

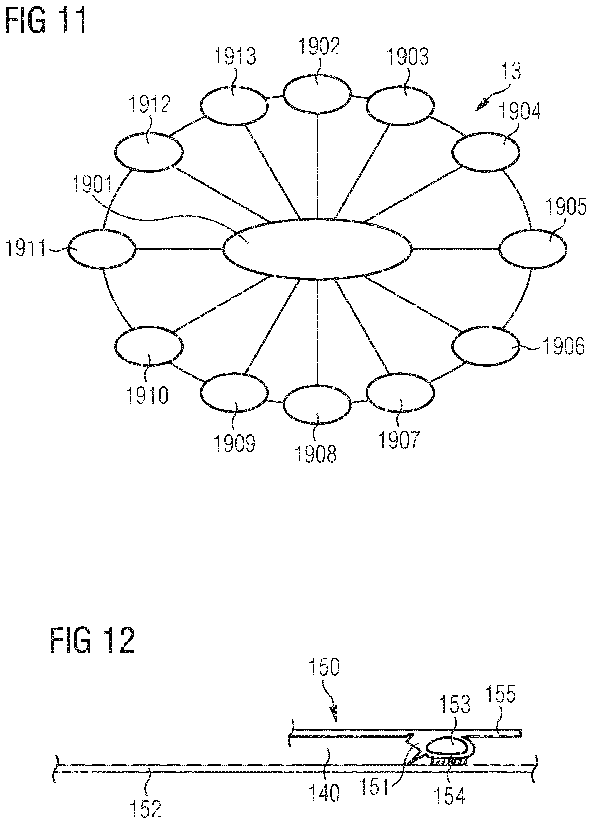

Besonders bevorzugt ist es, wenn die Tragmittel 131 als Luftkissen ausgeführt sind, was insbesondere in Verbindung mit einem Antriebsmittel in Form mindestens eines Reibrads 132 oder Mecanumrads, das mit einem Höhenverstellmechanismus 133 in seiner Höhe verstellbar ist. Dabei wird Luft aus einem Betriebsmittelspeicher 134, der einen Druckluftspeicher, bevorzugt in Form einer auswechselbaren Druckluftkartusche, aufweist, über ein entsprechendes, nicht dargestelltes Leitungssystem an Öffnungen in der Bodenplatte 130 geleitet. Die Öffnungen sind jeweils einzeln oder in Gruppen auf der dem Boden zugewandten Seite von Luftkissen-Pad-Dichtelementen umgeben, deren Form beispielsweise dem Umfang eines Rechtecks, Quadrats, Kreises oder einer anderen geometrischen Form entspricht. Besonderes bevorzugt sind dabei Luftkissen-Pad-Dichtelemente 150, wie in Figur 12 in halbseitigem Querschnitt dargestellt ausgeführt sind.

Das in Figur 12 gezeigte Luftkissen 140 mit Dichtelement 150 weist einen Grundkörper 155 auf. Im äußeren Randbereich des Grundkörpers 155 ist eine Dichtlippe 151 angeordnet, die beim Aktivieren des Luftkissens 140 durch Zufuhr von Druckluft gegen den Boden 152 gedrückt wird, aber auf den jeweiligen Bodenbelag -vorzugsweise einen Hartbelag ohne vertiefte Fugen, wie beispielsweise ein Parkett- so abgestimmt ist, dass möglichst gute Gleiteigenschaften der Dichtlippe 151 auf dem Boden 152 erreicht werden, was anhand der experimentell bestimmbaren Reibungskoeffizienten verifiziert werden kann.

Darüber hinaus ist ein von der Dichtlippe 151 getrennter, vorzugsweise weiter in Richtung zum nächsten äußeren Rand des Dichtelements 150 angeordneter, Stützring 153 mit Gleitbelag, am Grundkörper 155 vorhanden, dessen Innendruck anpassbar ist, indem er separat mit zugeführter Druckluft aufgeblasen wird oder fein dosiert über ein nicht gezeigtes Ventil Druckluft abgelassen wird. An der Unterseite des Stützrings 153 können als Sekundärdichtung zusätzliche Dichtkämme 154 angeordnet sein.

Das Dichtelement 150 ermöglicht dadurch eine variable Steuerbarkeit von Drücken in Luftkissen und Stützring 153, so dass das Verhältnis zwischen Luftbedarf und Gleiteigenschaften gezielt steuerbar ist. Ein weiterer Parameter, der zur Anpassung verwendet werden kann, ist die Höhenposition eines höhenverstellbaren Antriebsmittels, insbesondere von Reibrädern 132 oder Mecanumrädern.

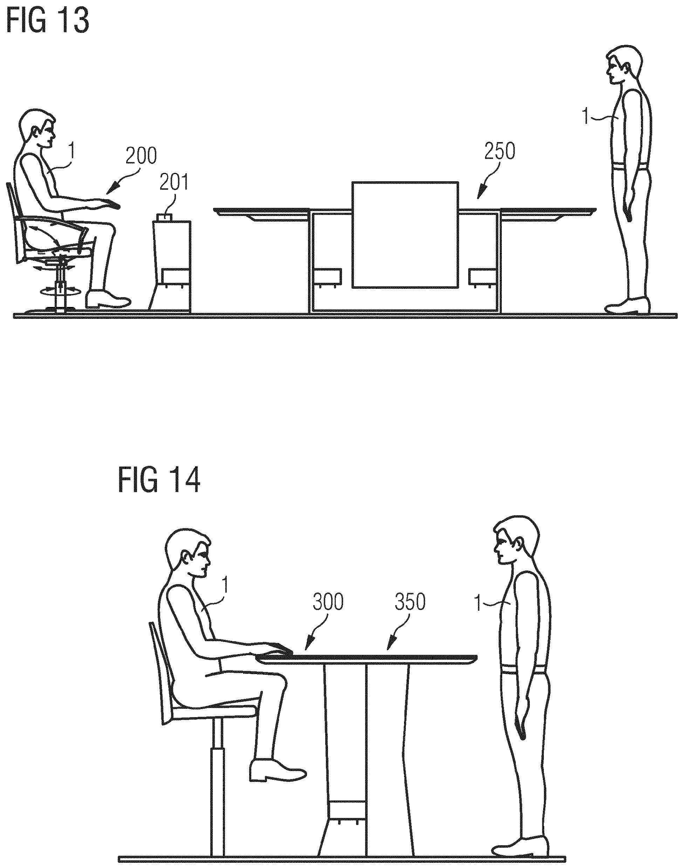

Wie die Figuren 13 und 14 verdeutlichen, sind aber auch andere Eventmobiliarbestandteile 200,250,300,350 mit Mitteln zur maschinellen Bewegung denkbar, die nicht sowohl eine Sitzmöglichkeit und einen Tischbestandteil aufweisen. In Figur 13 ist konkret eine Variante mit einem Eventmobiliarbestandteil 200 gezeigt, das sich von dem Eventmobiliarbestandteil 100 dadurch unterscheidet, dass es keine Tischplatte aufweist und dementsprechend auch die an der Tischplatte 121 des Eventmobiliarbestandteils 100 angeordneten Bauteile entfallen. Dafür ist hier der Tisch -der optional auch ein Anbauteil einer Buffetvorrichtung sein kann- als eigenes Eventmobiliarbestandteil 250 mit -zur Ausführungsform der Figur 2 identischen- Mitteln zu maschinellen Bewegung ausgeführt, an den der separate Stuhl, der das Eventmobiliarbestandteil 200 bildet, mit einer optionalen Kopplungsvorrichtung 201 angekoppelt werden kann.

Die in Figur 14 dargestellte Variante ist insbesondere für Fälle, in denen eine Bar-artige Atmosphäre gewünscht ist geeignet, beispielsweise wenn eine Veranstaltung wie ein Speed-Dating das Thema des animierten Restaurants ist. Das Eventmobiliarbestandteil 300 ist grundsätzlich identisch zum Eventmobiliarbestandteil 100 aufgebaut und unterscheidet sich von diesem primär im Hinblick auf die Tischhöhe und die Höhe des Stuhls. Das Eventmobiliarbestandteil 350 weist gar keine Sitzmöglichkeit, sondern nur einen (Steh)-Tisch auf, der Gast steht hier während der Bewegung auf einer Bodenplatte 350. Die Mittel zur maschinellen Bewegung und die Sensorik können aber sowohl für das Eventmobiliarbestandteil 300 als auch für das Eventmobiliarbestandteil 350 jeweils genauso ausgeführt werden wie oben für das Eventmobiliarbestandteil 100 beschrieben wurde.

Als Konsequenz aus der Tatsache, dass die Eventmobiliarbestandteile 100,200,250,300,350 mit Bewegungsmitteln für eine maschinelle Bewegung im Raum ausgestattet sind, kann eine erste Steuerung eine Bewegung insbesondere dieser Eventmobiliarbestandteile im Raum steuern. Beispielsweise kann eine Anzahl von Tischen gemeinsam durch das Restaurant gefahren werden und dann in andere Gruppen von Tischen mit zugehörigen Stühlen 11 zerfallen oder sich rekonfigurieren.

Eine zweite Besonderheit des Eventsystems 10 besteht darin, dass es -hier lediglich schematisch dargestellte- Vorrichtungen 12 zur sensorischen Stimulation von Gästen des animierten Restaurants aufweist, die hier auf die unterschiedlichen Bereiche verteilt sind. Insbesondere ist dies hier als eine visuelle Stimulation durch Projektionsapparate und Unterlegung dieser visuellen Effekte durch Soundeffekte realisiert, wie im Folgenden deutlich wird, können aber auch olfaktorische Effekte durch Freisetzung von Aromastoffen oder haptische Effekte, z.B. Vibrationen, Sprühnebel, Luftströmungen oder Ähnliches realisiert werden. Dabei kann der Output der sensorischen Stimulation je nach gewünschtem Thema durch entsprechende Programmierung leicht angepasst werden; sogar eine Individualisierung des Contents kann möglich sein.

Die dritte Besonderheit des Eventsystems 10 besteht darin, dass Bewegung der Eventmobiliarbestandteile und sensorische Stimulation der daran angeordneten Gäste 1 dabei durch einen Bestandteil einer Steuerung 13, die ebenfalls in Figur 1 nur schematisch gezeigt ist, aber nun anhand der Figur 11 näher erläutert wird, miteinander synchronisiert werden.

In der Ausführungsfigur der Figur 12 ist die Steuerung 13 so aufgebaut, dass die erste Steuerung 1901, welche erfindungsgemäß eingerichtet ist, um die maschinelle Bewegung und die Ausgabe der Vorrichtung zur sensorischen Stimulation von Gästen des animierten Restaurants miteinander synchronisiert zu steuern, durch eine Master- oder Hauptsteuerung gebildet wird. Diese erste Steuerung 1901 steht in Signalkommunikation mit einer Vielzahl von untergeordneten Steuerungen, von denen sie Daten empfängt und denen sie Steuerkommandos gibt, nämlich insbesondere
- eine Stuhl-Steuerung 1902, mit der die Bewegungsfreiheitsgrade und Spezialeffekte, wie z.B. die Vibration des Stuhls 110 des Eventmobiliarbestandteils 100 gesteuert werden und Sensordaten von am Stuhl 110 angeordneten Sensoren an die erste Steuerung 901 weitergeleitet werden,
- eine Tisch-Steuerung 1903, mit der die Bewegungsfreiheitsgrade und Spezialeffekte des Tisches bzw. Tischteils 120 des Eventmobiliarbestandteils 100 gesteuert werden und Sensordaten von am Tisch bzw. Tischteil 120 angeordneten Sensoren an die erste Steuerung 1901 weitergeleitet werden,
- eine Lichtsteuerung 1904, mit der Beleuchtung und Lichteffekte in den unterschiedlichen Bereichen des animierten Restaurants gesteuert werden,
- eine Gebläse-Steuerung 1905, mit der lokal und global vorgesehene Gebläse zur Umwälzung der Luft und zur Erzeugung von haptischen Effekten durch den Luftstrom gesteuert werden,
- eine Buffet-Steuerung 1906, mit der insbesondere Eventmobiliarbestandteile in Form von maschinell bewegten Buffets im Raum bewegt werden und die deren Koordinaten der ersten Steuerung 1901 zur Navigation übermittelt,
- eine Roboter-Steuerung 1907, mit der insbesondere Eventmobiliarbestandteile in Form von maschinell bewegten Robotern im Raum bewegt werden, die deren Interaktion mit Gästen und Umgebung steuert und die deren Koordinaten der ersten Steuerung 1901 zur Navigation übermittelt,
- eine Sound-Steuerung 1908, mit der die Soundeffekte beim Betrieb des animierten Restaurants erzeugt und koordiniert werden,
- eine Projektions-Steuerung 1909, mit der die visuellen Effekt, insbesondere die Projektionen beim Betrieb des animierten Restaurants erzeugt und koordiniert werden,
- eine Navigations-Steuerung 1910, mit der insbesondere die Bewegung der maschinell bewegten Eventmobiliarbestandteile 100 gesteuert und überwacht wird,
- eine Kalibriersteuerung 1911 DIE WAS TUT ???
- eine Operator-Steuerung 1912, mit der Eventmitarbeiter über ein Bediengerät einerseits aktiv in den Ablauf des animierten Restaurants eingreifen können und die andererseits den Eventmitarbeitern Informationen gibt, wenn bestimmte Betriebsmaterialien knapp werden, und
- eine Dockingstations-Steuerung 1913, mit der das Aufladen der Eventmobiliarbestandteile 100 mit Strom, Druckluft und/oder weiteren Verbrauchsmaterialien durch eine Dockingstation gesteuert wird.

Um das Wirkungsprinzip des Eventsystems 10 verständlicher werden zu lassen, soll nun ein exemplarischer Betrieb mit dem Thema "Weltraumreise" beschrieben werden.

Dabei betreten die Gäste zunächst den Barbereich 1, der beispielsweise wie ein Hangar eines Weltraumbahnhofs eingerichtet sein kann und warten dort bei einem Aperitif bis alle eingetroffen sind, sich für eine bestimmte Speisefolge entschieden haben und das Eventmobiliar einsatzbereit ist.

Anschließend öffnet sich eine Tür zum Erlebnisbereich 2, wobei den Gästen durch Projektion beispielsweise mittels der Vorrichtung zur sensorischen Stimulation 12 im Barbereich 1 suggeriert werden kann, es handele sich um die Tür eines Raumschiffs, das sie nun betreten.

Im nun betretenen Abschnitt des Erlebnisbereichs 2 finden die Gäste zunächst einen Tisch 11 mit 12 Plätzen vor, der - was aber zunächst gar nicht unbedingt erkennbar sein muss, sondern sogar zur Erzielung von Überraschungseffekten kaschiert werden kann, insbesondere mittels der Vorrichtung zur sensorischen Stimulation 12 durch eine geeignete Projektion - eigentlich aus 12 einzelnen Eventmobiliarbestandteilen, z.B. den Stuhl-Tisch-Baugruppen 100, die oben im Zusammenhang mit Figur 2 Detail beschrieben wurden, besteht, die jeweils einzeln maschinell beweglich sind.

Anzumerken ist, dass insbesondere dieser Bereich auch gut dafür geeignet ist, Docking-Stationen 16 bereitzustellen, an denen die Eventmobiliarbestandteile mit Betriebsmitteln wie z.B. Strom in Form von Aufladung eines Akkumulators, Pressluft, Betriebsmitteln für Spezialeffekte und dergleichen mehr versorgt werden; erstens weil damit am Anfang des Events sichergestellt werden kann, dass die während des Ablaufs nötigen Betriebsmittel vorhanden sind und zweitens weil an dieser Stelle die Eventmobiliarbestandteile üblicherweise eine ganze Weile an einer Stelle stehen bleiben.

Nachdem sich alle Gäste gesetzt haben und ein Quittiersignal gegeben wurde, beginnt ein Countdown 14 herunterzulaufen, der mit einem durch die Vorrichtung zur sensorischen Stimulation 12 im Erlebnisbereich 2 simulierten Raketenstart endet.

Beim Raketenstart setzt sich zu entsprechender akustischer Untermalung durch die Vorrichtung zur sensorischen Stimulation 12 im Erlebnisbereich 2 der Tisch 11 mit 12 Plätzen in Bewegung, wozu durch die Steuerung 13 die zwölf einzelnen Eventmobiliarbestandteile gemeinsam und synchron durch den Erlebnisbereich 2 bewegt werden. Durch die Steuerung 13 wird synchronisiert mit dieser Bewegung die Vorrichtung zur sensorischen Stimulation 12 im Erlebnisbereich 2 veranlasst, sich bewegende Bilder auf die Wände des Erlebnisbereichs 2 zu projizieren, um den Eindruck der Raketenbewegung zu erzeugen. Zusätzlich kann eine Untermalung durch Soundeffekte erfolgen.

Eine besonders überzeugende Wahrnehmung kann geschaffen werden, wenn maschinell bewegliche Wand-, Trenn- oder Sichtschutzelemente 15 mit Fenstern durch die Steuerung synchron mit dem Tisch 11 mit 12 Plätzen verfahren werden, so dass die sich bewegende Projektion auf die Wände des Erlebnisbereichs 2 durch die Fenster verfolgt wird und der Eindruck, sich ortsfest in einem Raumschiff zu befinden, auf diese Weise noch weiter verstärkt wird.

Ferner können weitere Effekte durch dieselbe oder eine andere Vorrichtung zur sensorischen Stimulation 12 hervorgebracht werden, um das Erlebnis der Weltraumreise zu verstärken. Beispielsweise können Vibrationsmittel, die in den Stühlen der Eventbestandteile angeordnet sind, während der Startsequenz von der Steuerung in Vibration versetzt werden.

Am Ende des so vorgegaukelten "Weltraumflugs" kann beispielsweise die Ankunft an einer Raumstation projiziert werden. Ein maschinell bewegtes Wandelement 15 wird in den Boden abgesenkt und der als anderer Hangar ausgestalteter Vorspeisenbereich 3 öffnet sich für den Blick der Gäste. Zum Erstaunen derselben beginnt sich nun aber der Tisch 11 für 12 Personen, an dem sie bislang gemeinsam gesessen haben, zu teilen, und die einzelnen Eventmobiliarbestandteile 100 führen eigenständig unter Kontrolle der Steuerung 13 maschinelle Bewegungen durch, die sie im Endeffekt beispielsweise zu vier Tischen 11 für vier Personen, die sich mittels maschineller Bewegung an vorgegebenen Stellen in Raum aus jeweils vier Eventmobiliarbestandteilen 100 gemäß Figur 2 konfiguriert haben, werden lassen, also einer Konfiguration, wie sie exemplarisch in Figur 3 skizziert ist. Natürlich sind auch andere Gruppierungen möglich.

Die Art und Weise, nach der diese Konfiguration erzeugt wird, kann auf unterschiedliche Weise festgelegt werden. Beispielsweise kann sie sich nach einer vorher, beispielsweise im Barbereich 1 abgegebenen Bestellung richten, so dass jeweils die Personen, die dieselbe Vorspeise essen wollen, an demselben Tisch für mehrere Personen landen oder die Zahl der an jedem Tisch vorhandenen unterschiedlichen Vorspeisen maximiert wird.

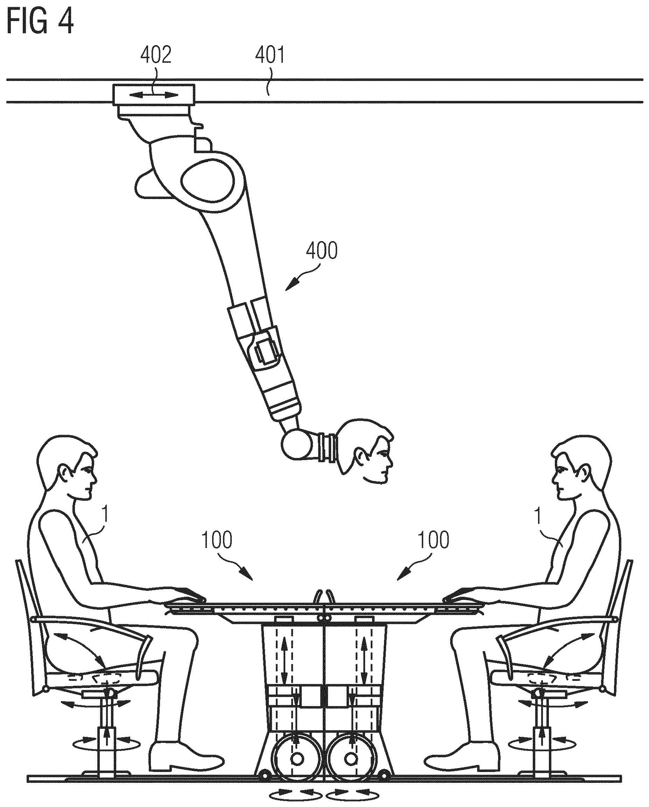

Eine unter Erlebnisaspekten sehr reizvolle Variante kann darin bestehen, dass der Gruppierung der Eventmobiliarbestandteile eine Interaktion mit einem weiteren maschinell beweglichen Eventmobiliarbestandteil in Form eines Roboter oder Roboterarms 400, wie er nun anhand der Figur 4 näher beschrieben wird, vorangeht.

In Figur 4 sind zwei Exemplare von maschinell beweglichen Eventmobiliarbestandteilen 100, wie sie oben im Kontext der Figur 2 beschrieben wurden, in miteinander verbundenem Zustand und mit darauf angeordnetem Gast 1 dargestellt. Ferner erkennt man ein weiteres Eventmobiliarbestandteil in Form eines von einer Führungsschiene 401 herabhängenden Roboters oder Roboterarms 400 mit Hilfe seiner angetriebenen Automatisierten Antriebseinheit als Bewegungsmittel 402 zur Ausführung einer maschinellen Bewegung.

Grundsätzlich kann ein solcher Roboter oder Roboterarm 400 auch auf dem Boden fahren, aber die von der Führungsschiene 401, die zu einem Schienensystem gehört, herabhängende Ausführungsform hat den Vorteil, dass die ohnehin schon komplexe Steuerung der maschinell beweglichen Eventmobiliarbestandteile 100 nicht noch weiter durch zusätzliche sich auf dem Boden bewegende Eventmobiliarbestandteile, die nicht notwendig dort vorhanden sein müssen, vereinfacht wird.

Der Roboter oder Roboterarm kommt als eine Reaktion auf einen Befehl der ersten Steuerung 901 angefahren und beginnt die Interaktion mit den Gästen 1. Dabei kann insbesondere ein Sprachinterface, wie man es von Computerassistenzsystemen wie Siri oder Alexa kennt zum Einsatz kommen, um die Ergebnisse der Interaktion auszuwerten und gegebenenfalls -etwa bei einem Bestellvorgang- in Handlungen umzusetzen.

Diese kann beispielsweise als eine Art Zugangskontrolle für das Betreten der Raumstation ablaufen, die von dem Roboter oder Roboterarm 400 durchgeführt wird, bei der der Roboter oder Roboterarm 400 bestimmte Präferenzen abfragt und die Steuerung 901 die Konfiguration der maschinell beweglichen Eventbestandteile 100 auf der Basis dieser Abfrage bestimmt oder berechnet, so dass z.B. einander zunächst unbekannte Personen mit ähnlichen Interessen oder beruflichen Hintergründen an einer gegebenen Tischkonfiguration zusammengeführt werden. Es ist aber auch möglich, an erst dieser Stelle den Bestellvorgang durch die Interaktion mit dem Roboter oder Roboterarm durchzuführen.

An dieser Stelle soll erwähnt werden, dass, auch wenn dies nicht ständig explizit erwähnt wird, eine sensorische Untermalung des Erlebnisses und/oder Einbettung des Restaurantbesuchs in eine Geschichte oder ein Thema durch die jeweiligen Vorrichtungen zur sensorischen Stimulation 12 fortgeführt werden kann, etwa durch Projektion von Bildern, Soundeffekte, Erschütterungen und andere haptische Erlebnisse oder Erzeugung von Gerüchen.

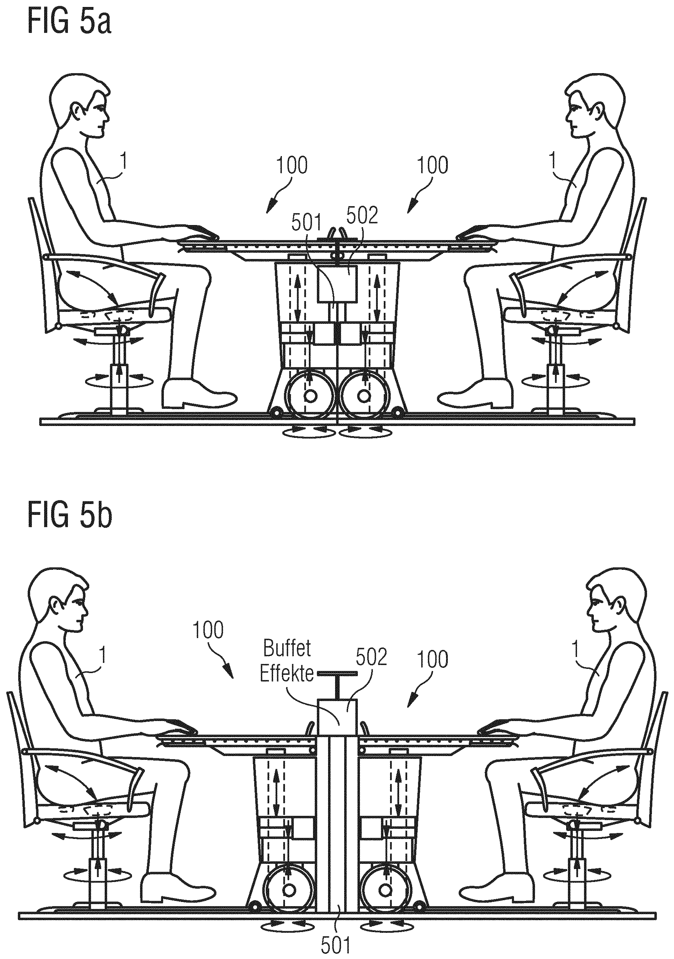

Nach der Herbeiführung einer gegebenen Tischkonfiguration kann dann im Vorspeisenbereich 3 die Vorspeise bereitgestellt werden. Grundsätzlich kann dies durch Eventpersonal oder auch durch Roboterarme erfolgen, eine andere sehr verblüffende Variante besteht aber darin, die Speise von oben oder von unten, gewissermaßen aus dem Tisch heraus auf dem Tisch erscheinen zu lassen, wie es nun am Beispiel der Figuren 5a und 5b detailliert erläutert wird.

In Figur 5a sind zwei Exemplare von maschinell beweglichen Eventmobiliarbestandteilen 100, wie sie oben im Kontext der Figur 2 beschrieben wurden, in miteinander verbundenem Zustand und mit darauf angeordnetem Gast 1 dargestellt. Ferner erkennt man im Innenraum, der von den Gehäusen 127 gebildet wird, bereits ein Mittel zur automatisierten Bereitstellung von Speisen 501, realisiert als ein aus einer Öffnung im Boden herausfahrbarer Stempel, auf dem ein Buffet-Container 502 angeordnet ist, der jeweils die gewählte Vorspeise der Gäste 1 enthält.

Um die Vorspeise tatsächlich auf den Tisch bzw. Tischteil 120 zu bringen, gleiten die maschinell beweglichen Eventmobiliarbestandteile 100 unmerklich ein Stück weit auseinander, wie dies in Figur 5b dargestellt ist, so dass der herausfahrbare Stempel mit darauf angeordnetem Buffetcontainer 502 auf das Niveau der Tischplatten 121 herausgefahren werden kann und die Speisen im Buffetcontainer 502 für die Gäste 1 zugänglich werden.

Es ist aber auch möglich, den Buffetcontainer von Anfang an in dem Eventmobiliarbestandteil anzuordnen und ihn dann mit einem Hubmechanismus, den das Eventmobiliarbestandteil aufweist, auf der Tischplatte auftauchen zu lassen.

Besonders effektiv ist dieses Vorgehen, wenn die Bereitstellung der Speisen erfolgt, während die Vorrichtung zur sensorischen Stimulation 12 die Aufmerksamkeit ablenkt.

Beispielsweise könnte auf eine Wand des Vorspeisenbereichs ein Blick an einem Teil der Raumstation entlang ins Weltall projiziert werden. Plötzlich beginnt sich in diesem Bild ein Punkt zu bewegen, worauf die Gäste 1 durch eine akustische Mitteilung "Intruder alert ! Intruder alert !" hingewiesen werden. Zusätzlich dreht die erste Steuerung 901 die Stühle 110 automatisch so, dass die Gäste bei geradeaus gerichtetem Blick den sich bewegenden Punkt erkennen. Der Punkt wird größer und größer und entpuppt sich als fremdes Raumschiff. Laserkanonen eröffnen das Feuer auf das Raumschiff, das zurückschießt und weiter auf die Raumstation zuhält. Es wird getroffen und verliert die Kontrolle. Eine akustische Warnung "Impact !Impact" ertönt, und das Raumschiff kollidiert mit dem projizierten Teil der Raumstation, während gleichzeitig eine Erschütterung durch die Vibrationsmodule der Stühle simuliert wird und dieser Moment für das Auseinanderfahren der maschinell bewegbaren Eventmobiliarbestandteile 100 und Bereitstellen der Vorspeise genutzt wird. Die Stühle 110 werden nach einer großen, visuell, akustisch und durch Erschütterung untermalten Explosion wieder auf Anweisung der ersten Steuerung 1901 an die Stuhl-steuerung 1902 in ihre Grundposition zurückgefahren, und die Gäste finden überrascht ihre Vorspeise auf dem Tisch vor.

Anzumerken ist, dass nicht zuletzt wegen der Tatsache, dass der gesamte Besuch im animierten Restaurant sich länger hinziehen kann, auch der Notwendigkeit eines Toilettenbesuchs Rechnung getragen werden muss, wozu der Sanitärbereich 7 bereitgestellt ist. Wegen der maschinellen Bewegungen von Eventmobiliarbestandteilen, die erfolgen, ist es bevorzugt, wenn auch beim Aufsuchen des Sanitärbereichs 7 die Bewegung dorthin erfolgt, während der Gast 1 auf einem Eventmobiliarbestandteil angeordnet ist. Der Gast 1 kann den Toilettenbesuch z.B. einleiten, indem er ein entsprechendes Bedürfnis auf einem Bedientablet anmeldet. Die Steuerung errechnet dann einen geeigneten Zeitpunkt und Weg und steuert die maschinelle Bewegung des entsprechenden Eventmobiliarbestandteils, wobei sie auch den aktuellen Besetzungsstand des Sanitärbereichs 7 berücksichtigen kann, so dass Wartezeiten in der Schlange vor den Toiletten minimiert werden können. Das Aufsuchen des Sanitärbereichs 7 sollte aber bevorzugt während der Verzehrphasen in den Bereichen 3,4,5 oder 6 erfolgen und nicht in den Übergangsphasen zwischen dem Aufenthalt in diesen Bereichen.

Nach dem Verzehr der Vorspeise setzen sich die Tische 11 oder die Eventmobiliarbestandteile, aus denen sie zusammengesetzt sind, wieder selbständig, d.h. von der Steuerung 13 kontrolliert und choreographiert, so dass eine Synchronisation mit dem Output der Vorrichtung zur sensorischen Stimulation 12 erfolgt -beispielsweise in einer auf die Art einer musikalischen Untermalung abgestimmten Fortbewegungsform, z.B. in Drehbewegungen bei Walzerklängen-, in Bewegung zum nächsten Bereich, dem ersten Bereich für Hauptgänge 4.

Grundsätzlich kann dies erfolgen, nachdem das benutzte Geschirr und Besteck entfernt wurde -durch Personal, Roboter oder Aufzugsmittel. Eine andere unterhaltsame Möglichkeit besteht darin, dass die Eventmobiliarbestandteile zunächst in einen Sektor des Küchenbereichs 8, um so das benutzte Geschirr und Besteck gewissermaßen selbst zurückzubringen. Während der Gast sich mit dem Eventmobiliarteil in diesen Bereich bewegt, kann z.B. durch die Vorrichtung 12 zur sensorischen Stimulation in diesem Bereich ein Film projiziert werden, der die wahrgenommene Realität erweitert. Beispielsweise könnten die benutzten Teller von einem realen Greifarm auf ein reales Laufband gestellt werden, das in einer Projektionswand verschwindet, das aber in der Projektion in eine von Aliens betriebene Küche fortgesetzt ist, wo z.B. ein Fressmonster Teller vom Band nimmt, Reste in sein Maul schüttet und den Teller dann an einen anderen Alientyp übergibt, der ihn mit einer überdimensionalen Zunge ableckt und dann auf ein Laufband mit "sauberen" Tellern stellt.

Das Eventmobiliarbestandteil 100 fährt dann an einem solchen Laufband mit sauberen Tellern, das aus der Projektionswand herauskommt, vorbei, und der Gast 1 wird akustisch und/oder visuell aufgefordert einen solchen Teller -der beispielsweise auch noch eine leicht feuchte oder leicht schleimige Oberfläche, eine ungewöhnliche Temperatur und/oder einen merkwürdigen Geruch haben könnte, um Anknüpfungspunkte zur "Reinigung" der Teller durch die Aliens im Film zu schaffen- vom Laufband zu nehmen, wenn der erste Bereich für Hauptgänge 4 als Buffetbereich betrieben wird. Besonders stark wirkt diese Illusion, wenn die Gäste individuell unterscheidbare Teller erhalten und der vom Laufband genommene Teller genauso aussieht wie der, den man abgegeben hat.

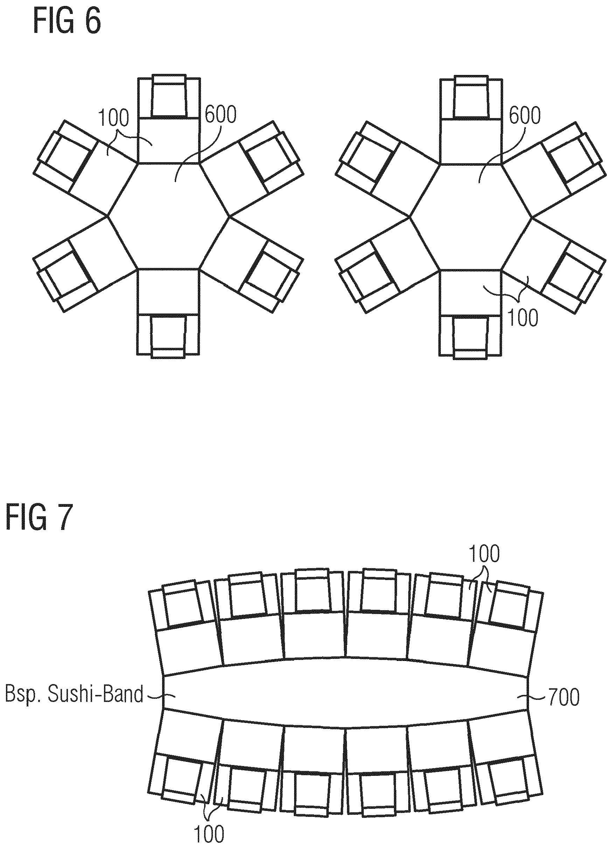

Anschließend fährt das Eventmobiliarbestandteil zu einem Buffetelement und dockt an diesem an. Mögliche Beispielkonfigurationen der Eventmobiliarbestandteile für einen in einem Buffetbetrieb betriebenen ersten Bereich für Hauptgänge 4 zeigen die Figuren 6 und 7.

In der in Figur 6 dargestellten Konfiguration sind zwei Eventmobiliarbestandteile in Form von sechseckigen Buffettischen 600 zu sehen, an deren Seiten jeweils ein maschinell bewegliches Eventmobiliarbestandteil 100 angedockt ist. Dabei weisen hier, aber nicht zwingend, die als Buffettische ausgeführten Eventmobiliarbestandteile 600 ihrerseits selbst jeweils Bewegungsmittel zur Durchführung einer maschinell gesteuerten Bewegung auf, was es ermöglicht, während die Gäste 1 in einem anderen Bereich sind, die als Buffettische ausgeführten Eventmobiliarbestandteile 600 maschinell gesteuert in einen Abschnitt des Küchenbereichs 8 zu fahren und dort für die nächsten Gäste wiederaufzufüllen.

In der in Figur 7 dargestellten Konfiguration ist ein als Sushi-Band ausgeführtes Eventmobiliarbestandteil 700 zu sehen, an dessen Seiten jeweils sechs maschinell bewegliche Eventmobiliarbestandteile 100 angedockt ist. Dabei weist in diesem Beispiel, aber nicht zwingend, das als Sushi-Band ausgeführte Eventmobiliarbestandteil 700 seinerseits selbst Bewegungsmittel zur Durchführung einer maschinell gesteuerten Bewegung auf, was es ermöglicht, während die Gäste in einem anderen Bereich sind die Buffettische maschinell gesteuert in einen Abschnitt des Küchenbereichs 8 zu fahren und dort für die nächsten Gäste wiederaufzufüllen.

Der Vollständigkeit halber sei noch darauf hingewiesen, dass natürlich auch eine Bewegung eines Evenmobiliarbestandteils 600,700 gemeinsam mit den daran angedockten Eventmobiliarbestandteilen 100 möglich ist.

Auch dieser Prozess kann durch Aktionselemente aufgewertet werden, beispielsweise wenn eingebettet in Output der Vorrichtung zur sensorischen Stimulation 12 die Buffetelemente selbst Mittel zur Durchführung einer maschinellen Bewegung aufweisen, sich im Raum bewegen und von den Eventmobiliarbestandteilen 100 mit Stuhl 110 und Tisch bzw. Tischteil 120 "eingefangen" werden müssen, die dann nach und nach andocken. Alternativ können sich auch erst Tafeln aus den Eventmobiliarbestandteilen bilden, die dann auseinanderfahren, wenn Buffettische bzw. Sushi-Bänder angefahren kommen und diese in ihre Mitte nehmen.

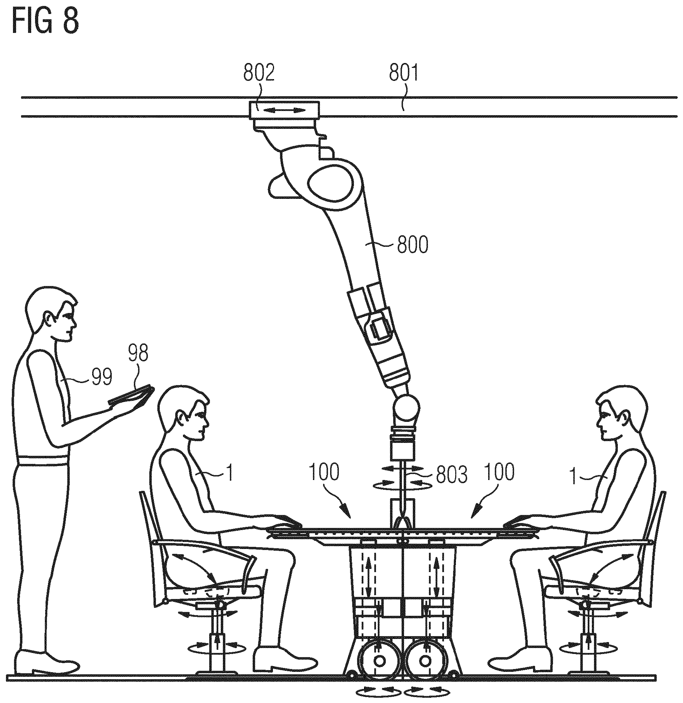

Nachdem die erste Hauptspeise am Buffet im ersten Bereich für Hauptgänge 4 verzehrt wurde, geht es weiter in den zweiten Bereich für Hauptgänge 5. Die maschinelle Bewegung der Eventmobiliarbestandteile dorthin kann beispielsweise, wie nun anhand der Figur 8 näher erläutert wird, von einem Eventmobiliarbestandteil in Form eines Roboters oder Roboterarms 800, der vorzugsweise an einem an der Decke montierten Schienensystem geführt wird, synchron begleitet oder kontrolliert werden.

In Figur 8 sind zwei Exemplare von maschinell beweglichen Eventmobiliarbestandteilen 100, wie sie oben im Kontext der Figur 2 beschrieben wurden, in miteinander verbundenem Zustand und mit darauf angeordnetem Gast 1 dargestellt. Ferner erkennt man ein weiteres Eventmobiliarbestandteil in Form eines von einer Führungsschiene 801 herabhängenden Roboters oder Roboterarms 800 mit Hilfe seiner als angetriebene Automatisierte Antriebseinheit als Bewegungsmittel 802 zur Ausführung einer maschinellen Bewegung. Der Roboter oder Roboterarm 800 kommt als eine Reaktion auf einen Befehl der ersten Steuerung 1901 an die Roboter-Steuerung 1907 angefahren und bringt eine Sonde 803 in die Nähe der Tische bzw. Tischteile 120 der verbundenen maschinell beweglichen Eventmobiliarbestandteile 100.

Die erste Steuerung 1901 steuert dann den Roboter oder Roboterarm 800 über die Roboter-Steuerung und die maschinell beweglichen Eventmobiliarbestandteile 100 über die Navigations-Steuerung 1910 simultan und synchron derart, dass für die Gäste der Eindruck entsteht, ihre Bewegung sei durch den Roboter oder Roboterarm 800 veranlasst, was sie sich aber natürlich nicht erklären können, da ja gar keine Wechselwirkung oder Kopplung erkennbar ist (und tatsächlich auch gar nicht besteht).

Ebenfalls gezeigt ist ein Eventmitarbeiter 99 mit einem Bediengerät 98, das die Einflussnahme auf die erste Steuerung 1901 über die Operator-Steuerung 1912 erlaubt, um bei für den Menschen erkennbaren oder vorhersagbaren Gefahrensituationen unverzüglich eingreifen zu können.

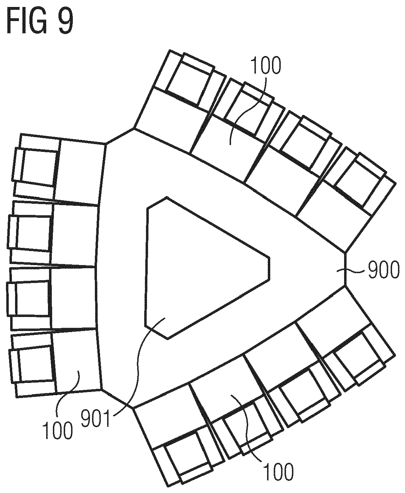

Die durch den Roboter oder Roboterarm 800 scheinbar veranlasste Bewegung kann insbesondere auch wieder über den Küchenbereich 8 führen, wo beispielsweise in Abhängigkeit von der Bestellung an eine von mehreren Show-Cooking-Stationen angedockt wird, wie es in Figur 9 exemplarisch gezeigt ist.

Figur 9 zeigt ein Eventmobiliarbestandteil 900 in Form einer Show-Cooking-Station 900, in deren Mitte 901 der Koch angeordnet ist und an dessen Seiten jeweils vier maschinell bewegliche Eventmobiliarbestandteile 100 angedockt sind. Die darauf angeordneten Gäste 1 können die Zubereitung ihrer Gerichte oder zumindest deren Endphase dann unmittelbar mitverfolgen, bekommen die Teller ganz frisch auf die Tische bzw. Tischteile 120. Nach dem Erhalt der zubereiteten Mahlzeit fahren die Eventmobiliarbestandteil 100 maschinell gesteuert weiter in den zweiten Bereich für Hauptgänge 5, wo sie sich dann wieder mit anderen Eventmobiliarbestandteilen zu einem Tisch 11 für eine bestimmte Zahl von Personen konfigurieren.

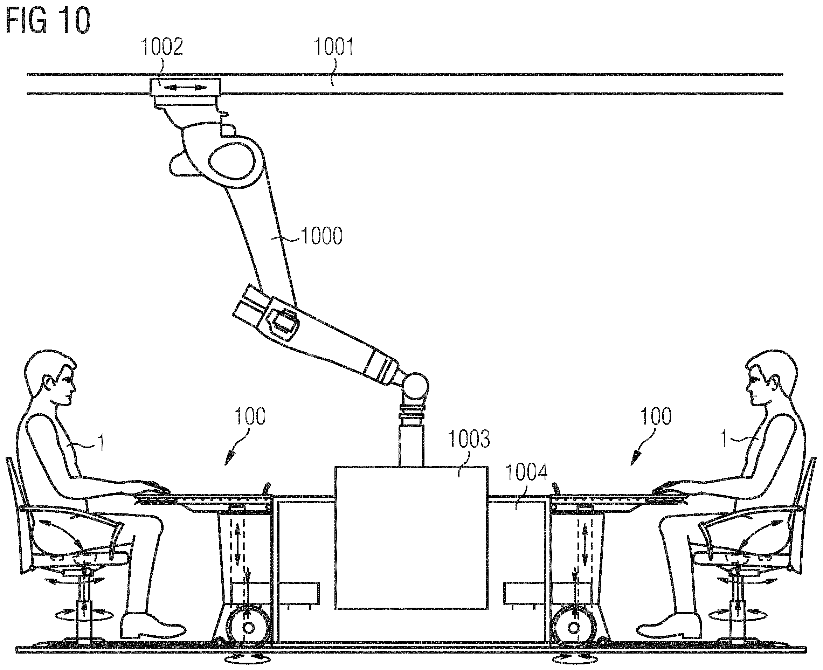

Nach dem Verzehr dieses Ganges bewegen sich die Eventmobiliarbestandteile dann zum Dessertbereich 6, wo sie sich wieder zu einem großen Tisch 11 für 12 Personen zusammensetzen. Das Dessert kann, von einem maschinell beweglichen Eventmobiliarbestandteil in Form eines Roboters oder Roboterarms 1000, wie in Figur 10 dargestellt, der an einer Führungsschiene 1001 die zu einem Schienensystem gehört mit einem Bewegungsmittel 1002 in Form einer Automatisierten Antriebseinheit verfahrbar aufgehängt ist, als Buffet 1003 in ein maschinell bewegliches Eventmobiliarbestandteil 1004 in Form eines Buffetmoduls oder auch individuell serviert werden. Während oder nach Abschluss des Verzehrs des Desserts kann von der Vorrichtung 12 zur sensorischen Stimulation der Rücksturz zur Erde an die Wände des Dessertbereichs 6 projiziert werden. Danach ist die Weltraumreise vorbei, und die Gäste werden wieder in den Lobbybereich 9 entlassen, wo sie aber natürlich ihr Abenteuer und die vielen einmaligen Eindrücke, die sie erlebt haben, noch bei einem Drink verarbeiten dürfen.

### Bezugszeichenliste

- 1: Gast
- 2: Erlebnisbereich
- 3: Vorspeisenbereich
- 4,5: Bereich für Hauptgänge
- 6: Dessertbereich
- 7: Sanitärbereich
- 8: Küchenbereich
- 9: Barbereich
- 10: Eventsystem
- 11: Tisch
- 12: Vorrichtung zur sensorischen Stimulation
- 13: Steuerung
- 15: Wand-, Trenn- oder Sichtschutzelement
- 16: Docking-Station
- 98: Bediengerät
- 99: Eventmitarbeiter
- 100: Eventmobiliarbestandteil
- 110: Stuhl
- 111: Traggestell
- 112: Sitzfläche
- 120: Tisch bzw. Tischteil
- 121: Tischplatte
- 122: Schnellkupplung
- 123: Gestell
- 127: Gehäuse
- 130: Bodenplatte
- 131: Tragmittel
- 132: Reibrad
- 133: Höhenverstellmechanismus
- 134: Betriebsmittelspeicher
- 135: Steuerungsmittel
- 136: Kommunikationsmodul
- 140: Luftkissen
- 150: Dichtelement
- 151: Dichtlippe
- 152: Boden
- 153: Stützring
- 154: Dichtkamm
- 155: Grundkörper
- 200: Eventmobiliarbestandteil
- 201: Kopplungsvorrichtung
- 250: Eventmobiliarbestandteil
- 300: Eventmobiliarbestandteil
- 350: Eventmobiliarbestandteil
- 400: Roboter oder Roboterarm
- 401: Führungsschiene
- 402: Bewegungsmittel
- 501: Mittel zur automatisierten Bereitstellung von Speisen
- 502: Buffet-Container
- 600: Eventmobiliarbestandteil
- 700: Eventmobiliarbestandteil
- 800: Roboter oder Roboterarm
- 801: Führungsschiene
- 802: Bewegungsmittel
- 803: Sonde
- 900: Eventmobiliarbestandteil
- 901: Mitte
- 1000: Roboter oder Roboterarm
- 1001: Führungsschiene
- 1002: Bewegungsmittel
- 1003: Buffetmodul
- 1111: Schnellkupplung
- 1112: Verschiebemechanismus
- 1113: Hubmechanismus
- 1114: Rotationsmechanismus
- 1115: Kippmechanismus
- 1121: Armlehne
- 1122: Rückenlehne
- 1123: Vorrichtung zur sensorischen Stimulation
- 1124: Sensor
- 1125: Bedienelement
- 1211: Sender und/oder Empfänger
- 1212: Abstandssensor
- 1213: Sicherheitssensor
- 1214: Mittel zur Erzeugung von Spezialeffekten
- 1215,1216: Display
- 1217: Bedienelement

- 1901: erste Steuerung
- 1902: Stuhl-Steuerung
- 1903: Tisch-Steuerung
- 1904: Lichtsteuerung
- 1905: Gebläse-Steuerung
- 1906: Buffet-Steuerung
- 1907: Roboter-Steuerung
- 1908: Sound-Steuerung
- 1909: Projektions-Steuerung
- 1910: Navigations-Steuerung
- 1911: Kalibrier-Steuerung
- 1912: Operator-Steuerung
- 1913: Dockingstations-Steuerung

## Patentansprüche

1. Eventmobiliar, das als Eventmobiliarbestandteile (100,200,250,300,350) mindestens einen Tisch und mindestens einen Stuhl aufweist,
wobei der mindestens eine Tisch (11,250), ein Tischteil (120,300,350) des mindestens einen Tisches (11), der mindestens eine Stuhl (110,200) und/oder eine Kombination der genannten Eventmobiliarbestandteile (100,200,250,300,350) Mittel zur Durchführung einer individuellen maschinell gesteuerten Bewegung aufweisen, so dass eine maschinell gesteuerte Bewegung unterschiedlicher Eventmobiliarbestandteile (100,200,250,300,350) zu demselben Zeitpunkt unterschiedlich ausfallen kann,
wobei das Eventmobiliar ferner mindestens eine Docking-Station (16) zur Versorgung von Bestandteilen des Eventmobiliars, welche Mittel zur Durchführung einer individuellen, maschinell gesteuerten Bewegung aufweisen, mit Energie und/oder Betriebsmaterial umfasst.

2. Eventmobiliar nach Anspruch 1,
**dadurch gekennzeichneeet**, dass das Eventmobiliar als Eventmobiliarbestandteil einen aus mehreren Tischteilen (120,300,350) zusammengesetzten oder zusammensetzbaren Tisch (11) und diesem Tisch (11) zugeordnete Stühle (110,200) aufweist.

3. Eventmobiliar nach Anspruch 2,
**dadurch gekennzeichnet, dass** einige Tischteile (120,300) oder alle Tischteile (120,300) mit jeweils mindestens einem der dem Tisch (11) zugeordneten Stühle (110) so verbunden sind, dass das Tischteil (120,300) und der damit verbundene Stuhl (110) eine Einheit als Eventmobiliarbestandteil (100) bilden, die gemeinsam im Raum bewegt werden kann und dass diese Rstaurantmobiliarbestandteile (100) Mittel zur Durchführung einer maschinell gesteuerten Bewegung aufweisen, so dass die Tischteile (120,300) und die damit verbundenen Stühle (110) zu mehreren Tischen (11) oder zu einem anders zusammengesetzten Tisch (11) rekonfigurierbar sind.

4. Eventmobiliar nach Anspruch 3,
**dadurch gekennzeichnet, dass** bei mindestens einem Eventmobilarbestandteil (100) ein Stuhl relativ (110) zum Tischteil (120) beweglich angeordnet ist.

5. Eventmobiliar nach Anspruch 4,
**dadurch gekennzeichnet, dass** die Bewegung des Stuhls (110) relativ zum Tischteil (120) bei mindestens einem Eventmobiliarbestandteil (100) eine angetriebene Komponente enthält und dass Antriebsmittel für diese Bewegung an dem Eventmobiliarbestandteil (100) angeordnet sind.

6. Eventmobiliar nach einem der Ansprüche 2 bis 5,
**dadurch gekennzeichnet, dass** mindestens ein Stuhl (110) und/oder mindestens ein Tisch (120) eines Eventmobiliarbestandteils (100) an dem Eventmobiliarbestandteil (100) über eine Schnellkupplung (1111,122) mit dem Eventmobiliarbestandteil (100) verbunden ist.

7. Eventmobiliar nach einem der Ansprüche 1 bis 6,
**dadurch gekennzeichnet, dass** zwei oder mehrere Tischteile vorhanden sind, die in mindestens einer Konfiguration des Eventmobiliars teilweise miteinander überlappend positionierbar sind.

8. Eventmobiliar nach einem der Ansprüche 1 bis 7,
**dadurch gekennzeichnet, dass** an mindestens einem Tisch (120) und/oder an mindestens einem Stuhl (110) mindestens ein Sensor (1124,1213) angeordnet ist, der zur Detektion der Anwesenheit, der aktuellen Position und/oder einer Bewegung eines Gastes (1) oder eines anderen Eventmobiliarbestandteils (100,200,250,300, 350) ausgelegt und eingerichtet ist.

9. Eventmobiliar nach einem der Ansprüche 1 bis 8,
**dadurch gekennzeichnet, dass** an mindestens einem Tisch (120) und/oder an mindestens einem Stuhl (110) mindestens eine Vorrichtung zur sensorischen Stimulation (1123,1214) eines Gastes (1), der an dem Tisch (120) und/oder dem Stuhl (110) sitzt, angeordnet ist.

10. Eventmobiliar nach Anspruch 9,
**dadurch gekennzeichnet, dass** die Vorrichtung zur sensorischen Stimulation (1123,1214) mit der maschinell gesteuerten Bewegung synchronisiert betrieben wird.

11. Eventmobiliar nach Anspruch 1 bis 10,
**dadurch gekennzeichnet, dass** eine globale Vorrichtung (12) zur sensorischen Stimulation vorhanden ist, die ebenfalls von der externen Steuerung (13) gesteuert ist.

12. Eventmobiliar nach Anspruch 11,
**dadurch gekennzeichnet, dass** Bedienvorrichtungen (98) für Eventmitarbeiter (99) vorhanden sind, die mit der externen Steuerung (13) in Signalkommunikation stehen und den Eingriff in Abläufe der externen Steuerung (13) ermöglichen.

13. Eventmobiliar nach einem der Ansprüche 1 bis 12,
**dadurch gekennzeichnet, dass** das Eventmobiliar ferner mindestens eine Buffetvorrichtung (600,700) umfasst, welche Mittel zur Durchführung einer individuellen, maschinell gesteuerten Bewegung aufweist.

14. Eventmobiliar nach einem der Ansprüche 1 bis 13,
**dadurch gekennzeichnet, dass** das Eventmobiliar ferner mindestens ein Wand-, Trenn- oder Sichtschutzelement (15) umfasst, welche Mittel zur Durchführung einer individuellen, maschinell gesteuerten Bewegung aufweist.

15. Eventmobiliar nach einem der Ansprüche 1 bis 14,
**dadurch gekennzeichnet, dass** die Mittel zur Durchführung der maschinell gesteuerten Bewegung mindestens ein Luftkissen (140) umfassen.

16. Eventmobiliar nach einem der Anspruch 15,
**dadurch gekennzeichnet, dass** das Luftkissen (140) ein Dichtelement (150) mit einem Grundkörper (155) und einer Dichtlippe (151) aufweist, die derart beweglich am Grundkörper (155) angeordnet ist, dass sie beim Aktivieren des Luftkissens (140) gegen den Boden (152) gedrückt wird.

17. Eventmobiliar nach einem der Ansprüche 1 bis 16,
**dadurch gekennzeichnet, dass** die Mittel zur Durchführung der maschinell gesteuerten Bewegung ein Schienensystem und/oder ein Magnetsystem und/oder ein Reibrad (132) umfassen.

18. Eventmobiliar nach Anspruch 17,
**dadurch gekennzeichnet, dass** mehr als ein Reibrad (132) oder Mecanumrad vorhanden ist und dass die Reibräder (132) oder Mecanumräder bei der Steuerung der maschinell gesteuerten Bewegung softwareseitig gekoppelt und beliebig steuerbar sind.

19. Eventmobiliar nach einem der Ansprüche 1 bis 18,
**dadurch gekennzeichnet, dass** ein Antrieb oder ein Betriebsmittelspeicher (134), der insbesondere die Energieversorgung sicherstellen kann, oder eine lokales Steuerungsmittel (135) oder ein Kommunikationsmodul (136) oder eine Kombination dieser Baugruppen an mindestens einem Eventmobiliarbestandteil (100) mit Mitteln zur Durchführung einer individuellen maschinell gesteuerten Bewegung vorgesehen sind.

## Claims

1. Item of event furniture which comprises, as event furniture components (100, 200, 250, 300, 350), at least one table and at least one chair,
wherein the at least one table (11, 250), a table part (120, 300, 350) of the at least one table (11), the at least one chair (110, 200), and/or a combination of the mentioned event furniture components (100, 200, 250, 300, 350) comprise means for performing an individual machine-controlled movement, such that a machine-controlled movement of different event furniture components (100, 200, 250, 300, 350) can be different at the same point in time,
wherein the item of event furniture further comprises at least one docking station (16) for supplying components of the item of event furniture, which comprise means for performing an individual, machine-controlled movement, with energy and/or operating material.

2. Item of event furniture according to claim 1, **characterised in that** the item of event furniture comprises, as an event furniture component, a table (11) that is or can be assembled from a plurality of table parts (120, 300, 350), and chairs (110, 200) associated with said table (11).

3. Item of event furniture according to claim 2, **characterised in that** some table parts (120, 300) or all the table parts (120, 300) are each connected to at least one of the chairs (110) associated with the table (11) such that the table part (120, 300) and the chair (110) connected thereto form a unit as an event furniture component (100) which can be moved together in space, and that these restaurant furniture components (100) comprise means for performing a machine-controlled movement, such that the table parts (120, 300) and the chairs (110) connected thereto can be reconfigured to form a plurality of tables (11) or to form a differently assembled table (11).

4. Item of event furniture according to claim 3, **characterised in that** in the case of at least one event furniture component (100) a chair (110) is arranged so as to be movable relative to the table part (120).

5. Item of event furniture according to claim 4, **characterised in that** the movement of the chair (110) relative to the table part (120) in the case of at least one event furniture component (100) contains a driven component, and that drive means for this movement are arranged on the event furniture component (100).

6. Item of event furniture according to any of claims 2 to 5, **characterised in that** at least one chair (110) and/or at least one table (120) of an event furniture component (100) on the event furniture component (100) is connected to the event furniture component (100) via a quick coupling (1111, 122).

7. Item of event furniture according to any of claims 1 to 6, **characterised in that** two or more table parts are provided, which can be positioned so as to overlap one another in part in at least one configuration of the item of event furniture.

8. Item of event furniture according to any of claims 1 to 7, **characterised in that** at least one sensor (1124, 1213) is arranged on at least one table (120) and/or on at least one chair (110), which sensor is designed and configured for detecting the presence, the current position, and/or a movement of a guest (1) or of another event furniture component (100, 200, 250, 300, 350).

9. Item of event furniture according to any of claims 1 to 8, **characterised in that** at least one device is arranged on at least one table (120) and/or on at least one chair (110), for sensory stimulation (1123, 1214) of a guest (1) sitting at the table (120) and/or on the chair (110).

10. Item of event furniture according to claim 9, **characterised in that** the device for sensory stimulation (1123, 1214) is operated in a manner synchronised with the machine-controlled movement.

11. Item of event furniture according to claims 1 to 10, **characterised in that** a global device (12) for sensory stimulation is provided, which is also controlled by the external controller (13).

12. Item of event furniture according to claim 11, **characterised in that** operating devices (98) for event staff (99) are present, which are in signal communication with the external controller (13) and allow for intervention in the processes of the external controller (13).

13. Item of event furniture according to any of claims 1 to 12,
**characterised in that** the item of event furniture further comprises at least one buffet device (600, 700) which comprises means for performing an induvial, machine-controlled movement.

14. Item of event furniture according to any of claims 1 to 13,
**characterised in that** the item of event furniture further comprises at least one wall, separating or screen element (15) which comprises means for performing an individual, machine-controlled movement.

15. Item of event furniture according to any of claims 1 to 14,
**characterised in that** the means for performing the machine-controlled movement comprise at least one air cushion (140).

16. Item of event furniture according to claim 15, **characterised in that** the air cushion (140) comprises a sealing element (150) having a main body (155) and a sealing lip (151) which is arranged movably on the main body (155) in such a way that it is pressed against the base (152) upon actuation of the air cushion (140).

17. Item of event furniture according to any of claims 1 to 16,
**characterised in that** the means for performing the machine-controlled movement comprise a rail system and/or a magnet system and/or a friction when (132).

18. Item of event furniture according to claim 17, **characterised in that** more than one friction wheel (132) or Mecanum wheel is present, and that the friction wheels (132) or Mecanum wheels can be coupled on the software side and controlled as desired during control of the machine-controlled movement.

19. Item of event furniture according to any of claims 1 to 18,
**characterised in that** a drive or an operating means store (134), which can in particular ensure the energy supply, or a local control means (135), or a communications module (136), or a combination of these modules, are provided on at least one event furniture component (100) with means for carrying out an individual machine-controlled movement.

## Revendications

1. Mobilier pour évènements, qui a, comme constituants (100, 200, 250, 300, 350) de mobilier pour évènements, au moins une table et au moins une chaise,
dans lequel la au moins une table (11, 250), une partie (120, 300, 350) de table de la au moins une table (11), la au moins une chaise (110, 200) et/ou une combinaison des constituants (100, 200, 250, 300, 350) mentionnés de mobilier pour évènements ont des moyens pour effectuer un déplacement individuel commandé mécaniquement de manière à ce qu'un mouvement commandé mécaniquement de constituants (100, 200, 250, 300, 350) différents de mobilier pour évènements ne puisse pas avoir lieu différemment au même instant,
dans lequel le mobilier pour évènements comprend en outre un docking-poste (16) pour l'alimentation en énergie et/ou en matière de fonctionnement de constituants du mobilier pour évènements, lesquels ont des moyens pour effectuer un mouvement individuel commandé mécaniquement.

2. Mobilier pour évènements suivant la revendication 1, **caractérisé en ce que** le mobilier pour évènement a, comme constituant de mobilier pour évènement, une table (11) composée de plusieurs parties (120, 300, 350) de table ou pouvant l'être et des chaises (110, 200) associées à cette table (11).

3. Mobilier pour évènements suivant la revendication 2, **caractérisé en ce que** certaines parties (120, 300) de la table ou toutes les parties (120, 300) de la table sont reliées respectivement à au moins l'une des chaises (110) associées à la table (11), de manière à ce que la partie (120, 300) de la table et la chaise (110) ainsi reliée forment une unité comme constituant (100) de mobilier pour évènements, qui peut être déplacée conjointement dans l'espace, et **en ce que** ces constituants (100) de mobilier pour évènements ont des moyens pour effectuer un déplacement commandé mécaniquement de manière à ce que les parties (120, 300) de la table et les chaises (110) ainsi reliées puissent être reconfigurées en plusieurs tables (11) ou en une table (11) autrement composée.

4. Mobilier pour évènements suivant la revendication 3, **caractérisé en ce que**, pour au moins un constituant (100) de mobilier d'évènements une chaise est montée mobile relativement (110) à la partie (120) de table.

5. Mobilier pour évènements suivant la revendication 4, **caractérisé en ce que** le mouvement de la chaise (110) relativement à la partie (120) de table comporte, pour au moins un constituant (100) de mobilier pour évènements, une composante entraînée et **en ce que** des moyens d'entraînement pour ce mouvement sont montés sur le constituant (100) de mobilier pour évènements.

6. Mobilier pour évènements suivant l'une des revendications 2 à 5,
**caractérisé en ce qu'**au moins une chaise (110) et/ou au moins une table (120) d'un constituant (100) de mobilier pour évènements est assemblé sur le constituant (100) de mobilier pour évènements au constituant (100) de mobilier pour évènements par un accouplement rapide (1111, 122).

7. Mobilier pour évènements suivant l'une des revendications 1 à 6,
**caractérisé en ce qu'**il y a deux ou plusieurs parties de table, qui, dans au moins une configuration du mobilier pour évènements, peuvent être mises en position en se chevauchant au moins en partie.

8. Mobilier pour évènements suivant l'une des revendications 1 à 7,
**caractérisé en ce que**, sur au moins une table (120) et/ou sur au moins une chaise (110), est monté au moins un capteur (1124, 1213), qui est conçu et agencé pour la détection de la présence, de la position en cours et/ou d'un déplacement d'un hôte (1) ou d'un autre constituant (100, 200, 250, 300, 350) de mobilier pour évènements.

9. Mobilier pour évènements suivant l'une des revendications 1 à 8,
**caractérisé en ce que**, sur au moins une table (120) et/ou sur au moins une chaise (110), est monté au moins un dispositif de stimulation (1123, 1214) par analyse sensorielle d'un hôte (1), qui est assis à la table (120) et/ou sur la chaise (110).

10. Mobilier pour évènements suivant la revendication 9, **caractérisé en ce que** le dispositif de stimulation (1123, 1214) par analyse sensorielle est mis en fonctionnement de manière synchronisée avec le mouvement commandé mécaniquement.

11. Mobilier pour évènements suivant la revendication 1 à 10, **caractérisé en ce qu'**il est prévu un dispositif (12) global de stimulation par analyse sensorielle, qui est commandé également par la commande (13) extérieure.

12. Mobilier pour évènement suivant la revendication 11, **caractérisé en ce qu'**il est prévu des dispositifs (98) de manœuvre pour des collaborateurs (99) à l'évènement, qui sont en communication de signal avec la commande (13) extérieure et qui rendent possible l'intervention dans des déroulements de la commande (13) extérieure.

13. Mobilier pour évènements suivant l'une des revendications 1 à 12,
**caractérisé en ce que** le mobilier pour évènements comprend en outre au moins un dispositif (600, 700) formant buffet, qui a des moyens pour effectuer un déplacement individuel commandé mécaniquement.

14. Mobilier pour évènements suivant l'une des revendications 1 à 13,
**caractérisé en ce que** le mobilier pour évènement comprend en outre au moins un élément (15) de paroi, de séparation ou de protection visuelle, qui a des moyens pour effectuer un déplacement individuel commandé mécaniquement.

15. Mobilier pour évènements suivant l'une des revendications 1 à 14,
**caractérisé en ce que** les moyens pour effectuer le déplacement commandé mécaniquement comprennent au moins un coussin (140) d'air.

16. Mobilier pour évènements suivant la revendication 15, **caractérisé en ce que** le coussin (140) d'air a un élément (150) d'étanchéité ayant un corps (155) de base et une lèvre (151) d'étanchéité, qui est montée mobile sur le corps (155) de base, de manière à être poussée sur le sol (152) lorsque le coussin (140) d'air est activé.

17. Mobilier pour évènements suivant l'une des revendications 1 à 16,
**caractérisé en ce que** les moyens pour effectuer le déplacement commandé mécaniquement comprennent un système de rails et/ou un système magnétique et/ou une roue (132) de friction.

18. Mobilier pour évènements suivant la revendication 17, **caractérisé en ce qu'**il y a plus qu'une roue (132) de friction ou qu'une roue mecanum et **en ce que** les roues (132) de friction ou les roues mecanum sont, lors de la commande du mouvement commandé mécaniquement, couplées par logiciel et peuvent être commandés à volonté.

19. Mobilier pour évènements suivant l'une des revendications 1 à 18,
**caractérisé en ce qu'**il est prévu un entraînement ou un accumulateur (134) de moyen d'entraînement, qui peut assurer en particulier l'alimentation en énergie, ou un moyen (135) local de commande ou un module (136) de communication ou une combinaison de ceux-ci sur au moins un constituant (100) de mobilier pour évènements avec des moyens pour effectuer un déplacement individuel commandé mécaniquement.
